(19) Europäisches Patentamt
European Patent Office
Office européen des brevets

(11) **EP 4 648 457 A1**

(12) **EUROPEAN PATENT APPLICATION**

(43) Date of publication:
**12.11.2025 Bulletin 2025/46**

(21) Application number: **25174163.3**

(22) Date of filing: **05.05.2025**

(51) International Patent Classification (IPC):
**H04W 16/14** *(2009.01)*    **G06N 7/00** *(2023.01)*
**G06N 20/00** *(2019.01)*    *G01W 1/10* *(2006.01)*

(52) Cooperative Patent Classification (CPC):
**H04W 16/14; G06N 5/01; G06N 7/00; G06N 20/00; G06N 20/10; G06N 20/20;** G01W 1/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.05.2024 FI 20245559**
**17.01.2025 FI 20255032**

(71) Applicant: **Nokia Solutions and Networks Oy**
**02610 Espoo (FI)**

(72) Inventor: **FAVERO, Daniel**
**Bothell (US)**

(74) Representative: **Nokia EPO representatives**
**Nokia Technologies Oy**
**Karakaari 7**
**02610 Espoo (FI)**

(54) **PREDICTING TROPOSPHERIC DUCTING EVENTS**

(57)    Disclosed is a method comprising collecting input data (521) comprising at least weather forecast information for an area in which one or more cells (104B, 104C, 104D) are located; providing the input data (521) to a prediction algorithm (520), wherein the prediction algorithm (520) comprises: a machine learning model (500) trained to predict tropospheric ducting events impacting the one or more cells (104B, 104C, 104D), and a cell site database (511) indicating a location and one or more configuration parameters of the one or more cells (104B, 104C, 104D); and receiving, from the prediction algorithm (520), output data (522) indicating one or more predicted tropospheric ducting events expected to impact the one or more cells (104B, 104C, 104D) based on the input data (521).

FIG. 5A

## 520: Prediction algorithm

521: Weather forecast data

511: Cell site database

500: Trained ML model

522: Ducting prediction

FIG. 5B

**Description**

FIELD

The following example embodiments relate to wireless communication and to machine learning.

BACKGROUND

When certain atmospheric conditions, such as temperature inversions, cause layers of moist warm air getting trapped between layers of cool dry air, radio frequency waves can "bend" by specific atmospheric refraction and travel along extended paths in the Earth's atmosphere. This effect is called tropospheric ducting.

SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising means for causing the apparatus to perform at least: collecting input data comprising at least weather forecast information for an area in which one or more cells are located; providing the input data to a prediction algorithm, wherein the prediction algorithm comprises: a machine learning model trained to predict tropospheric ducting events impacting the one or more cells, and a cell site database indicating a location and one or more configuration parameters of the one or more cells; and receiving, from the prediction algorithm, output data indicating one or more predicted tropospheric ducting events expected to impact the one or more cells based on the input data.

According to a second aspect, there is provided the apparatus of the first aspect, further being caused to: apply, based on the output data, one or more mitigation techniques for preventing performance degradation expected to be caused by the one or more predicted tropospheric ducting events in the one or more cells.

According to a third aspect, there is provided the apparatus of the first or second aspect, further being caused to: perform, based on the output data, one or more simulations for determining one or more optimized configuration parameters that minimize the impact of the one or more predicted tropospheric ducting events in the one or more cells; and apply the one or more optimized configuration parameters to the one or more cells.

According to a fourth aspect, there is provided the apparatus of any of the first to third aspects, further being caused to: generate a report comprising information related to the one or more predicted tropospheric ducting events; and transmit the report to one or more receivers.

According to a fifth aspect, there is provided an apparatus comprising means for causing the apparatus to perform at least: collecting training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and training a machine learning model based on the training data for predicting tropospheric ducting events impacting the one or more cells.

According to a sixth aspect, there is provided the apparatus of the fifth aspect, further being caused to: deploy the machine learning model to a self-organizing network or to a non-real-time radio intelligent controller or to a near-real-time radio intelligent controller after the training is completed.

According to a seventh aspect, there is provided the apparatus of the sixth aspect, further being caused to: evaluate an accuracy of the machine learning model via a confusion matrix after the training is completed, wherein the machine learning model is deployed based on determining that the accuracy is above a threshold according to the evaluation.

According to an eighth aspect, there is provided the apparatus of any of the fifth to seventh aspects, further being caused to: generate the interference label data, wherein the generation of the interference label data comprises at least: collecting radio measurement information and one or more performance metrics associated with the one or more cells; determining, based on the radio measurement information, an operational received interference power value per a cell of the one or more cells; determining, based on additional radio measurement information of the cell, a deviation of the cell from the operational received interference power value; determining, based at least on the radio measurement information and the one or more performance metrics of the cell, a vulnerability threshold above which a performance of the cell is impacted by the remote interference caused by the tropospheric ducting; comparing the deviation of the cell to the vulnerability threshold; and assigning the cell with a label from a plurality of pre-defined labels based at least on the comparison of the deviation of the cell to the vulnerability threshold, wherein the label indicates the probabilistic confidence of the level of the remote interference in the cell.

According to a ninth aspect, there is provided the apparatus of the eighth aspect, further being caused to: determine, based on the radio measurement information, an operational received interference power value of one or more neighbor cells of the cell; determine, based on additional radio measurement information of the one or more neighbor cells, a deviation of the one or more neighbor cells from the operational received interference power value of the one or more neighbor cells; and compare the deviation of the one or more neighbor cells to the vulnerability threshold, wherein the label is assigned based further on the comparison of the deviation of the one or more neighbor cells to the vulnerability threshold.

According to a tenth aspect, there is provided the apparatus of the ninth aspect, further being caused to: select the one or more neighbor cells based at least on a maximum distance from the cell, such that a distance between the cell and the one or more neighbor cells is below or equal to the maximum distance, wherein the selection of the one or more neighbor cells is based further on a similarity between an antenna azimuth direction of the cell and an antenna azimuth direction of the one or more neighbor cells.

According to an eleventh aspect, there is provided the apparatus of any of the first to tenth aspects, wherein the one or more configuration parameters in the cell site database comprise at least one of: channel bandwidth information of the one or more cells, antenna height information of the one or more cells, antenna azimuth information of the one or more cells, antenna beamwidth information of the one or more cells, an electrical tilt of one or more antennas of the one or more cells, or a mechanical tilt of the one or more antennas of the one or more cells.

According to a twelfth aspect, there is provided the apparatus of any of the first to eleventh aspects, wherein the weather forecast information comprises at least one of: temperature information, precipitation probability information, humidity information, wind speed information, wind direction information, dew point information, or a descriptive textual description of expected weather conditions.

According to a thirteenth aspect, there is provided the apparatus of the twelfth aspect, further being caused to: convert the descriptive textual description of the expected weather conditions from a text format to a set of numerical values by using a word embedding technique, wherein the set of numerical values are provided to the machine learning model.

According to a fourteenth aspect, there is provided the apparatus of any of the first to thirteenth aspects, wherein the machine learning model comprises a random forest algorithm.

According to a fifteenth aspect, there is provided a method comprising: collecting input data comprising at least weather forecast information for an area in which one or more cells are located; providing the input data to a prediction algorithm, wherein the prediction algorithm comprises: a machine learning model trained to predict tropospheric ducting events impacting the one or more cells, and a cell site database indicating a location and one or more configuration parameters of the one or more cells; and receiving, from the prediction algorithm, output data indicating one or more predicted tropospheric ducting events expected to impact the one or more cells based on the input data.

According to a sixteenth aspect, there is provided a method comprising: collecting training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and training a machine learning model based on the training data for predicting tropospheric ducting events impacting the one or more cells.

According to a seventeenth aspect, there is provided a computer program comprising instructions which, when executed by an apparatus, cause the apparatus to perform at least the following: collecting input data comprising at least weather forecast information for an area in which one or more cells are located; providing the input data to a prediction algorithm, wherein the prediction algorithm comprises: a machine learning model trained to predict tropospheric ducting events impacting the one or more cells, and a cell site database indicating a location and one or more configuration parameters of the one or more cells; and receiving, from the prediction algorithm, output data indicating one or more predicted tropospheric ducting events expected to impact the one or more cells based on the input data.

According to an eighteenth aspect, there is provided a computer program comprising instructions which, when executed by an apparatus, cause the apparatus to perform at least the following: collecting training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and training a machine learning model based on the training data for predicting tropospheric ducting events impacting the one or more cells.

According to a nineteenth aspect, there is provided a system comprising at least a machine learning trainer entity and a network entity; wherein the machine learning trainer entity is configured to: collect training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and train a machine learning model based on the training data for predicting tropospheric ducting events impacting the one or more cells; wherein the network entity is configured to: collect input data comprising at least weather forecast information for the area in which the one or more cells are located; provide the input data to a prediction algorithm, wherein the prediction algorithm comprises: the machine learning model trained to predict tropospheric ducting events impacting the one or more cells, and the cell site database indicating the location and the one or more configuration parameters of the one or more cells; and receive, from the prediction algorithm, output data indicating one or more predicted tropospheric ducting events expected to impact the one or more cells based on the input data.

According to a twentieth aspect, there is provided a system comprising at least a machine learning trainer entity and a network entity; wherein the machine learning trainer entity comprises means for causing the machine learning trainer entity at least to: collect training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and train a machine learning model based on the training data for predicting tropospheric ducting events impacting the one or more cells; wherein the network entity comprises means for causing the network entity at least to: collect input data comprising at least weather forecast information for the area in which the one or more cells are located; provide the input data to a prediction algorithm, wherein the prediction algorithm comprises: the machine learning model trained to predict tropospheric ducting events impacting the one or more cells, and the cell site database indicating the location and the one or more configuration parameters of the one or more cells; and receive, from the prediction algorithm, output data indicating one or more predicted tropospheric ducting events expected to impact the one or more cells based on the input data

According to a twenty-first aspect, there is provided a non-transitory computer readable medium comprising program instructions which, when executed by an apparatus, cause the apparatus to perform at least the following: collecting input data comprising at least weather forecast information for an area in which one or more cells are located; providing the input data to a prediction algorithm, wherein the prediction algorithm comprises: a machine learning model trained to predict tropospheric ducting events impacting the one or more cells, and a cell site database indicating a location and one or more configuration parameters of the one or more cells; and receiving, from the prediction algorithm, output data indicating one or more predicted tropospheric ducting events expected to impact the one or more cells based on the input data.

According to a twenty-second aspect, there is provided a non-transitory computer readable medium comprising program instructions which, when executed by an apparatus, cause the apparatus to perform at least the following: collecting training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and training a machine learning model based on the training data for predicting tropospheric ducting events impacting the one or more cells.

According to a twenty-third aspect, there is provided a computer readable medium comprising program instructions which, when executed by an apparatus, cause the apparatus to perform at least the following: collecting input data comprising at least weather forecast information for an area in which one or more cells are located; providing the input data to a prediction algorithm, wherein the prediction algorithm comprises: a machine learning model trained to predict tropospheric ducting events impacting the one or more cells, and a cell site database indicating a location and one or more configuration parameters of the one or more cells; and receiving, from the prediction algorithm, output data indicating one or more predicted tropospheric ducting events expected to impact the one or more cells based on the input data.

According to a twenty-fourth aspect, there is provided a computer readable medium comprising program instructions which, when executed by an apparatus, cause the apparatus to perform at least the following: collecting training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and training a machine learning model based on the training data for predicting tropospheric ducting events impacting the one or more cells.

According to a twenty-fifth aspect, there is provided an apparatus comprising at least one processor, and at least one memory storing instructions that, when executed by the at least one processor, cause the apparatus at least to: collect input data comprising at least weather forecast information for an area in which one or more cells are located; provide the input data to a prediction algorithm, wherein the prediction algorithm comprises: a machine learning model trained to predict tropospheric ducting events impacting the one or more cells, and a cell site database indicating a location and one or more configuration parameters of the one or more cells; and receive, from the prediction algorithm, output data indicating one or more predicted tropospheric ducting events expected to impact the one or more cells based on the input data.

According to a twenty-sixth aspect, there is provided an apparatus comprising at least one processor, and at least one memory storing instructions that, when executed by the at least one processor, cause the apparatus at least to: collect training data comprising at least: a cell site database indicating a location and one or more configuration parameters of one or more cells, weather forecast information for an area in which the one or more cells are located, and interference label data comprising one or more labels that indicate a probabilistic confidence of a level of remote interference caused by tropospheric ducting in the one or more cells; and train a machine learning model based on the training data for predicting tropospheric ducting events impacting the one or more cells.

BRIEF DESCRIPTION OF THE DRAWINGS

In the following, various example embodiments will be described in greater detail with reference to the accompanying drawings, in which

FIG. 1 illustrates an example of a wireless communication network;
FIG. 2 illustrates an example of a system;
FIG. 3 illustrates tropospheric ducting;
FIG. 4 illustrates time-division duplexing;
FIG. 5A illustrates a training phase of a machine learning model;
FIG. 5B illustrates an inference phase of a machine learning model;
FIG. 6 illustrates a flow chart;
FIG. 7 illustrates a flow chart;
FIG. 8 illustrates an example of a feature correlation matrix;
FIG. 9 illustrates a flow chart;
FIG. 10 illustrates a flow chart;
FIG. 11 illustrates a flow chart;
FIG. 12 illustrates a flow chart;
FIG. 13 illustrates a flow chart;
FIG. 14 illustrates a flow chart;
FIG. 15 illustrates a flow chart;
FIG. 16 illustrates class prediction F1 score achieved with a trained ducting predictor;
FIG. 17 illustrates an example of an apparatus;
FIG. 18 illustrates an example of an apparatus;
FIG. 19 illustrates an example of an artificial neural network; and
FIG. 20 illustrates an example of a computational node.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), sixth generation (6G), or seventh generation (7G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

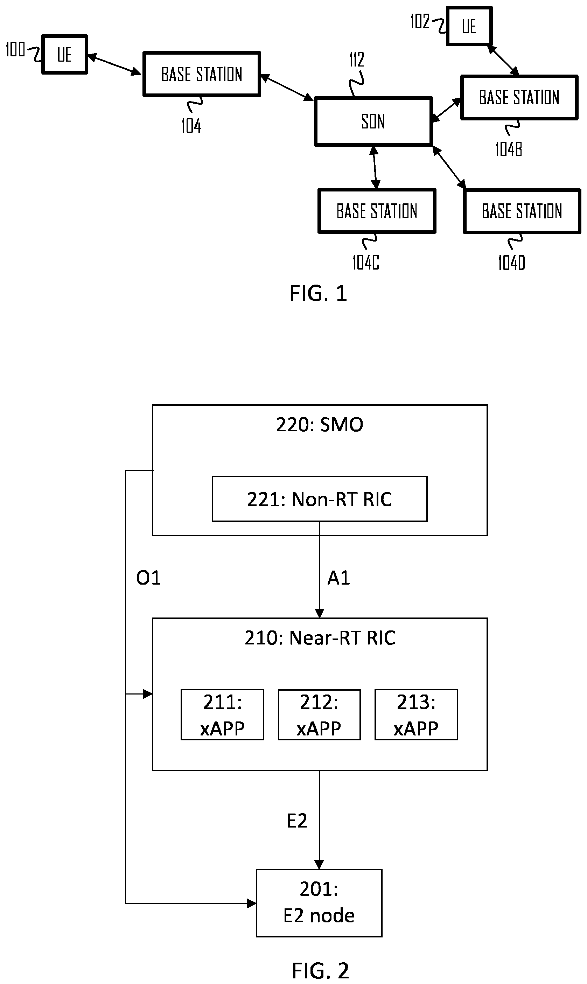

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN).

FIG. 1 shows user equipment (UE) 100, 102 configured to be in a wireless connection on one or more communication channels in a radio cell with a base station 104, 104B of a radio access network.

A base station 104 may comprise a computing device configured to control the radio resources of the base station 104 and to be in a wireless connection with one or more UEs 100, 102. The base station 104 may also be referred to as a base transceiver station (BTS), an access node, an access point, a cell site, a network node, a radio access network node, or a RAN node.

The base station 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The base station 104 may include or be coupled to transceivers. From the transceivers of the base station 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the base station 104 may be called uplink (UL) or reverse link, and the wireless connection (e.g., radio link) from the base station 104 to the UE 100, 102 may be called downlink (DL) or forward link. A UE 100 may also communicate directly with another UE 102, and vice versa, via a wireless connection generally referred to as a sidelink (SL). It should be appreciated that the base station 104 or its functionalities may be implemented by using any node, host, server, access point or other entity suitable for providing such functionalities.

The radio access network may comprise more than one base station, in which case the base stations 104, 104B, 104C, 104D may also be configured to communicate with one another over wired or wireless links. These links between base stations may be used for sending and receiving control plane signaling and also for routing data from one base station to another base station.

The base stations 104, 104B, 104C, 104D may be connected to a self-organizing network (SON 112). The SON 112 is an automation technology designed to make the planning, configuration, management, optimization and healing of radio access networks simpler and faster. With the SON 112, operational base stations may regularly self-optimize parameters and algorithmic behavior in response to observed network performance and radio conditions. Furthermore, self-healing mechanisms can be triggered to temporarily compensate for a detected equipment outage, while awaiting a more permanent solution. For example, the SON 112 may comprise a centralized SON. In some instances, the SON solution can be distributed, this is the case when algorithms operate within the base station.

The base stations 104, 104B, 104C, 104D are connected to a core network (CN). The core network may comprise an evolved packet core (EPC) network and/or a 5th generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network may also be able to communicate with one or more external networks, such as a public switched telephone network or the Internet, or utilize services provided by them. For example, in 5G wireless communication networks, the UPF of the core network may be configured to communicate with an external data network via an N6 interface. In LTE wireless communication networks, the P-GW of the core network may be configured to communicate with an external data network.

It should also be understood that the distribution of functions between core network operations and base station operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a household appliance with radio parts, a sensor comprising a wireless modem, or a computing device comprising a wireless modem integrated in a vehicle or in a house.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service. The UE 100, 102 may also utilize the cloud. In some applications, the computation for a given UE may be carried out in the cloud or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

5G enables using multiple-input and multiple-output (MIMO) antennas in the base station 104 and/or the UE 100, 102, many more base stations than an LTE network (a so-called small cell concept), including macro sites operating in cooperation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, base stations and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In one embodiment, a base station 104, 104B, 104C, 104D may comprise: a radio unit (RU) comprising a radio transceiver (TRX), i.e., a transmitter (Tx) and a receiver (Rx); one or more distributed units (DUs) that may be used for the so-called Layer 1 (L1) processing and real-time Layer 2 (L2) processing; and a central unit (CU) (also known as a centralized unit) that may be used for non-real-time L2 and Layer 3 (L3) processing. The CU may be connected to the one or more DUs for example via an F1 interface. Such an embodiment of the base station may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU may be a logical node hosting radio resource control (RRC), service data adaptation protocol (SDAP) and/or packet data convergence protocol (PDCP), of the NR protocol stack for a base station. The CU may comprise a control plane (CU-CP), which may be a logical node hosting the RRC and the control plane part of the PDCP protocol of the NR protocol stack for the base station. The CU may further comprise a user plane (CU-UP), which may be a logical node hosting the user plane part of the PDCP protocol and the SDAP protocol of the CU for the base station.

The DU may be a logical node hosting radio link control (RLC), medium access control (MAC) and/or physical (PHY) layers of the NR protocol stack for the base station. The operations of the DU may be at least partly controlled by the CU. It should also be understood that the distribution of functions between the DU and the CU may vary depending on the implementation.

Cloud computing systems may also be used to provide the CU and/or DU. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

It is obvious for a person skilled in the art that the base stations 104, 104B, 104C, 104D depicted in FIG. 1 are just an example of a part of a radio access network, and in practice the radio access network may comprise a different number of base stations than shown in FIG. 1, the UEs 100, 102 may have access to a plurality of radio cells, and the radio access network may also comprise other apparatuses, such as physical layer relay access nodes or other entities. At least one of the base stations may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The base station(s) 104, 104B, 104C, 104D of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

FIG. 2 illustrates an example of a system based on open radio access network (O-RAN) architecture.

The O-RAN architecture comprises two parts: 1) a split architecture part with 5G standalone architecture, each of which is called an E2 node 201, and 2) an automation part that comprises a near-real-time (near-RT) radio intelligent controller (RIC) 210 located within the radio access network, and a non-real-time (non-RT) RIC 221 located within a network management entity called service management and orchestration (SMO) 220.

The SMO 220 may be connected to the RAN network functions, including the near-RT RIC 210, via an O1 interface.

The non-RT RIC 221 (which resides in the SMO 220) performs non-real-time operations. The non-RT RIC 221 may comprise one or more rApps (RAN applications), which are software applications used for various RAN management and optimization tasks that may operate on a timescale of seconds to minutes, for example. rApps may leverage data analytics and artificial intelligence or machine learning models to provide insights and automate processes such as network configuration, performance management, and/or fault management

The non-RT RIC 221 may communicate with the near-RT RIC 210 through the O1 and/or A1 interface. The non-RT RIC 221 may be used to control the near-RT RIC 210. For example, the non-RT RIC 221 may modify the near-RT RIC platform 210 and/or the internal applications 211, 212, 213 (xApps) of the near-RT RIC 210. Furthermore, the non-RT RIC 221 may monitor, analyze and provide feedback on the state of the near-RT RIC 210, provide enrichment information, and/or facilitate, train and distribute machine learning models for the previously mentioned tasks.

The near-RT RIC 210 may communicate with one or more E2 nodes 201 through the E2 interface for time-sensitive near-real-time management and control of radio resources, such as interference management, handover management, Quality of Service (QoS) management, and radio connection management.

An E2 node 201 may be defined as a logical node terminating the E2 interface interfacing with the near-RT RIC 210. An E2 node may comprise or execute one or more RAN functions. For example, an E2 node 201 may comprise at least one of: an O-RAN central unit control plane (O-CU-CP), an O-RAN central unit user plane (O-CU-UP), an O-RAN distributed unit (O-DU), and/or a base station 104, 104B, 104C, 104D such as an O-RAN eNB (O-eNB). Although only one E2 node 201 is shown in FIG. 2, it should be noted there may also be more than one E2 node connected to the near-RT RIC 210.

The near-RT RIC 210 may host one or more xApps 211, 212, 213 and common framework platform functions to support and be used by the xApps 211, 212, 213. Although three xApps 211, 212, 213 are shown in FIG. 2, it should be noted that the number of xApps 211, 212, 213 may also be different than three (i.e., there may be one or more xApps).

A given xAPP 211, 212, 213 may control some RAN function(s) or a part of it. The xApps 211, 212, 213 can also exchange information between them, enabling to build sophisticated use cases leveraging the capabilities of the multiple xApps. An xApp 211, 212, 213 may comprise a descriptor and a software package. The descriptor provides metadata on the xApp related to its version, provider, software package location, management information regarding fault, configuration, accounting, performance and security (FCAPS), and the data types that it takes as input as well as the data types that it produces as output. The software package implements the logic that collects RAN-related information coming from the E2 node(s) 201 and provides optimized and intelligent RAN control decisions.

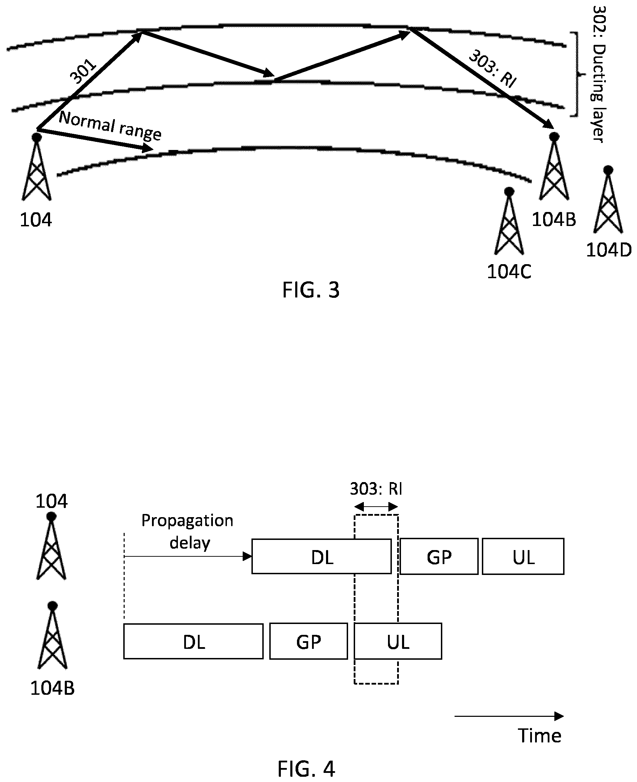

FIG. 3 illustrates tropospheric ducting. As the deployment of time-division duplexing (TDD) spectrum for 5G services expands, tropospheric conditions have become a relevant topic among network operators due to its impact on network performance. When certain atmospheric conditions, such as temperature inversions, cause layers of moist warm air getting trapped between layers of cool dry air, radio frequency waves can "bend" by specific atmospheric refraction and travel along extended paths in the Earth's atmosphere. In other words, in certain atmospheric conditions, radio waves may be trapped in the lower layers of the Earth's atmosphere in a so-called ducting layer 302. This effect is called tropospheric ducting. This bending allows radio signals 301 to experience less attenuation and, as a result, propagate over much longer distances than they normally would. These long-traveling signals 301 may be harmful especially to TDD systems.

FIG. 4 illustrates time-division duplexing. TDD uses a transmission structure, where downlink and uplink transmissions occur over the same frequency band. Communication happens via a defined frame structure, where some slots are used for downlink (DL) transmissions, while other slots are used for uplink (UL) transmissions, along with slots containing both DL and UL with a guard period (GP) in between. The guard period between DL and UL slots ensures that, under normal (non-ducting) propagation conditions, the DL transmissions from one base station 104B do not cause interference into the UL slots of another nearby base station 104C, 104D.

In the presence of favorable tropospheric ducting (tropo-ducting) conditions, "bent" radio signals 301 experience less attenuation, and when traveling long distances, may cause remote interference (RI) 303. Remote interference is a specific type of interference among distant TDD base stations 104, 104B, 104C, 104D (e.g., gNBs), operating under the same (or overlapping) frequency channels, due to the result of the propagation delay of the long-distance radio signal 301 exceeding the provisioned guard period of the TDD system. When tropospheric ducting occurs, downlink signals 301 of the so-called aggressor base station 104 may be captured by uplink receivers of the so-called victim base station(s) 104B, 104C, 104D. The spectrum in which this effect occurs may be approximately from 0.3 to 30 gigahertz (GHz), thus covering the most widely used frequency bands in 5G networks.

Propagation conditions in tropospheric ducting depend mainly on humidity, air temperature and pressure of the troposphere. Since humidity plays a major role, remote interference is more probable in regions with high evaporation rates (e.g., tropical regions, coastal environments). In inland areas, remote interference may be present more strongly during the transition between seasons (e.g., spring to summer and summer to autumn), and for coastal areas during winter, though it has been observed throughout the year in certain areas.

The intensity of tropospheric ducting varies based on many factors. However, it should be noted that uplink paths suffer tremendously in intense ducting situations. The impact of remote interference to mobile networks may be seen as a detriment of the UE's ability to gain access and retain reliable service. During tropospheric ducting conditions, performance may be significantly degraded compared to non-ducting periods, for example in terms of block error rate (BLER), random-access channel (RACH) success rates, success rates of accessing the network, radio failure rates, cell throughput, and user throughput. Therefore, the impact of remote interference caused by tropospheric ducting can be severe, possibly affecting the ability to access the network and to make voice and data calls.

Current deployed tropo-ducting mitigation techniques are reactive, which means that they require the presence of interference to be effective. In other words, in order for a base station (e.g., gNB) to enforce any mitigation to remote interference, an actual remote interference event must be occurring. This means that the mitigation is only implemented after a period of actual network degradation. This period may be in the range of a few minutes or even a few hours. During this period, users are exposed to intermittent interference. In addition, some mitigation techniques may require a certain amount of time to be implemented. For instance, field key performance indicator (KPI) counter measurements may have to become available and radio parameters and characteristics may have to be changed (e.g., some radios may require a hardware reset to change beam characteristics). If network operators can only apply the mitigation in such a reactive manner, this limits the range of available options.

Some example embodiments provide a method for predicting (i.e., forecasting) tropospheric ducting events impacting mobile networks. For example, some example embodiments may provide forecasting at an hourly level up to five days into the future to provide a clear path for network mitigation. Tropospheric ducting events may be labeled to generate training data for training a machine learning model 500 to predict future tropospheric ducting events. In addition to the labelled interference data, the training data also comprises a cell site database and weather forecast information.

The predictions may serve various purposes, such as applying one or more mitigation techniques via a platform such as a SON 112 or a non-real-time RIC 221 or a near-real-time RIC 210 (in a proactive manner before any performance issues occur), or providing insights to customers on when to expect tropo-ducting events. Alternatively, or additionally, the predictions may enable the emulation of one or more mitigation techniques and allow such mitigations to be evaluated for their effectiveness before applying them in the real system.

Some example embodiments are described below using principles and terminology of 5G radio access technology without limiting the example embodiments to 5G radio access technology, however.

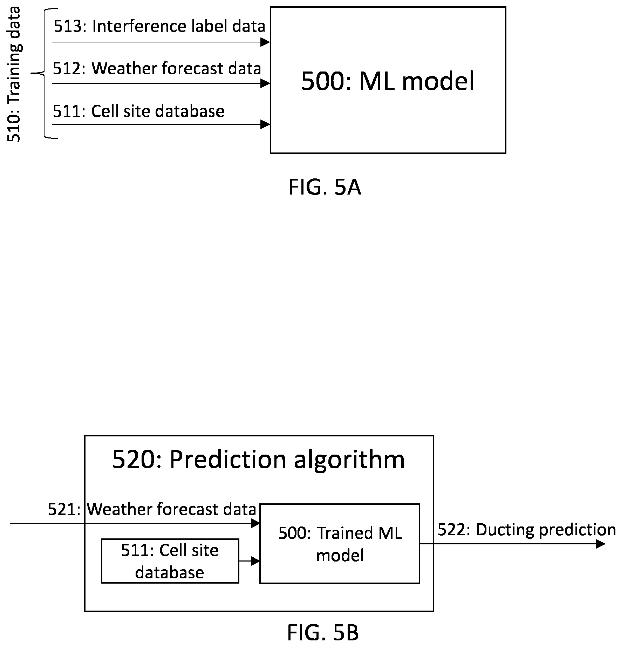

FIG. 5A illustrates the training phase of the machine learning model 500. The training data 510 comprises at least: a cell site database 511 (or cell site data) indicating a location (e.g., latitude and longitude coordinates) and one or more configuration parameters (or parameter values) of each cell (or cell site) of one or more cells 104B, 104C, 104D (or cell sites), weather forecast information 512 for an area in which the one or more cells (or cell sites) are located, and interference label data 513 comprising one or more labels that indicate a likelihood or probabilistic confidence of a level of remote interference caused by tropospheric ducting in the one or more cells.

Based on the training data 510, the machine learning model 500 is trained to predict tropospheric ducting events (or remote interference events) impacting the one or more cells. A training algorithm (e.g., a supervised learning algorithm such as a random forest algorithm) may be used to process the training data 510 and train the machine learning model 500 for predicting tropospheric ducting events impacting the one or more cells.

As explained above, a tropospheric ducting event is a phenomenon where radio waves travel much farther than usual due to specific atmospheric conditions. This may occur when there is a temperature inversion in the troposphere (the lowest layer of the Earth's atmosphere), where a layer of warm air is trapped between cooler air layers. This inversion creates a "duct" that guides the radio waves over long distances, potentially causing interference with communication signals.

The one or more configuration parameters (or parameter values) in the cell site database 511 may comprise, for example, at least one of: channel bandwidth information of the one or more cells, antenna height information of the one or more cells, antenna azimuth information of the one or more cells, antenna beamwidth information of the one or more cells, an electrical tilt of one or more antennas of the one or more cells, or a mechanical tilt of the one or more antennas of the one or more cells.

The channel bandwidth information indicates the bandwidth, i.e., the width of the frequency band used by the cell. The bandwidth determines the data capacity of the cell.

The antenna height information indicates the height at which the cell's antenna is installed. Higher antennas can cover larger areas and reduce obstructions.

The antenna azimuth information indicates the horizontal angle or direction in which the antenna of the cell is pointed. The antenna azimuth helps in targeting specific areas for better coverage.

The antenna beamwidth information indicates the angle over which the antenna of the cell radiates its signal. A narrower beamwidth focuses the signal more precisely, while a wider beamwidth covers a larger area.

The electrical tilt refers to the adjustment of the antenna's angle electronically to change the direction of the signal. It helps in optimizing coverage and reducing interference.

The mechanical tilt refers to the physical adjustment of the antenna's angle to change the direction of the signal. Like electrical tilt, it helps in optimizing coverage and reducing interference.

The weather forecast information 512 may comprise, for example, at least one of: temperature information, precipitation probability information, humidity information, wind speed information, wind direction information, dew point information, or a descriptive textual description of expected weather conditions.

The temperature information may indicate, for example, the current, high, and low temperatures for the area in which the one or more cells are located.

The precipitation probability information indicates the likelihood of precipitation (e.g., rain, snow, sleet, etc.) occurring in the area in which the one or more cells are located (e.g., over a certain time period). For example, the likelihood may be indicated as a percentage or a value between 0 and 1.

The humidity information indicates the amount of water vapor in the air. High humidity can make it feel warmer, while low humidity can make it feel cooler.

The wind speed information indicates how fast the wind is blowing in the area in which the one or more cells are located. For example, wind speed may be measured in kilometers per hour (km/h) or miles per hour (mph).

The wind direction information indicates the direction from which the wind is blowing. For example, the wind direction may be expressed in terms of the compass direction (e.g., north, south, east, west).

The dew point information indicates the temperature at which air becomes saturated with water vapor and dew forms. It helps to indicate how humid the air feels.

The descriptive textual description of expected weather conditions provides an overview of the anticipated weather in the area in which the one or more cells are located, including factors like temperature, precipitation, wind, and overall conditions (e.g., sunny, cloudy, rainy).

In case the weather forecast information comprises descriptive weather forecasts, then the description of the expected weather conditions may be converted from a text format to a set of numerical values by using a word embedding technique. The set of numerical values may then be provided as input to the machine learning model (i.e., the set of numerical values may be included in the training data 510 instead of the text description).

The interference label data 513 refers to data that includes labels or tags indicating the likelihood or confidence level of interference caused by tropospheric ducting events. These labels are used to train the machine learning model 500 to recognize patterns or correlations between tropospheric ducting events, the weather forecast information 512, and the cell site database 511 in order to predict future tropospheric ducting events. In other words, the interference label data 513 helps the machine learning model 500 to learn from past instances of remote interference, enabling it to predict future events more accurately.

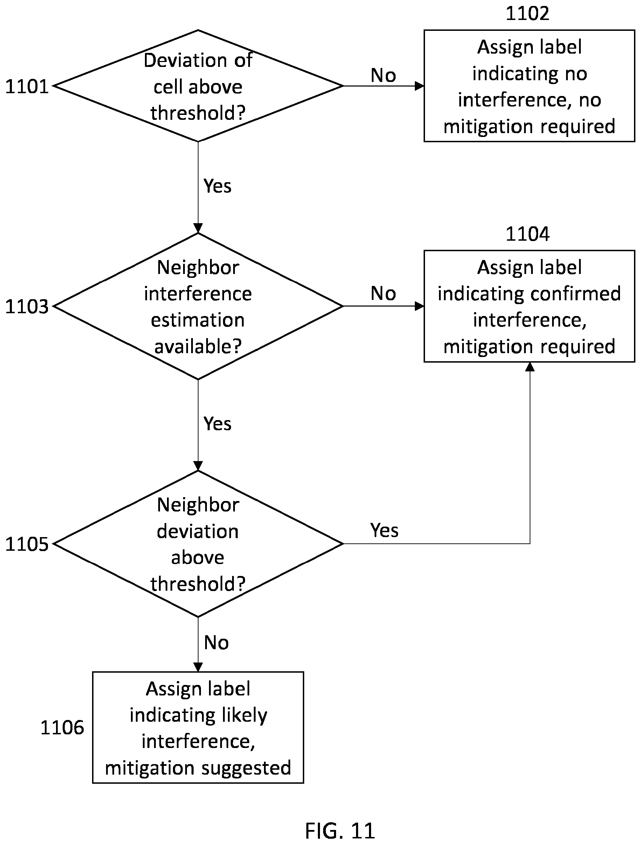

The labels are markers or indicators that provide information about the presence of remote interference. The labels can be binary (e.g., interference/no interference) or probabilistic (e.g., "no interference", "likely interference" or "confirmed interference", as shown in FIG. 11).

The probabilistic confidence refers to the likelihood or probability that a certain level of remote interference will occur. For example, a label for "likely interference" may indicate a 70% confidence that a specific cell will experience remote interference due to tropospheric ducting. As another example, a label for "confirmed interference" may indicate a 100% confidence that a specific cell will experience remote interference due to tropospheric ducting. As another example, a label for "no interference" may indicate a 100% confidence that a specific cell will not experience remote interference due to tropospheric ducting.

FIG. 5B illustrates the inference phase of the prediction algorithm 520, which comprises or includes the trained machine learning model 500 and the cell site database 511 (which was collected during the training phase). For example, the prediction algorithm 520 may be deployed in a SON 112, or as an rApp in a non-real-time RIC 221, or as an xApp in a near-real-time RIC 210.

The prediction algorithm 520 refers to the entire process used to make predictions based on input data 521. The prediction algorithm 520 may include several components and steps, such as data preparation, feature engineering, model application, and/or post-processing. The trained machine learning model 500 refers to the core model that makes the actual prediction. In other words, the prediction algorithm 520 encompasses all the steps required to generate predictions (i.e., not only the core model 500).

Data preparation refers to collecting and preprocessing the input data 521 to ensure it is in the right format for the trained machine learning model 500. For example, the preprocessing may include feature normalization, which involves scaling the input features to ensure that they have a consistent range or distribution.

Feature engineering refers to selecting and transforming relevant features from the input data 521.

Model application refers to using the trained machine learning model 500 to make predictions.

Post-processing refers to refining the output data to make it more interpretable or actionable.

Referring to FIG. 5B, in the inference phase, input data 521 is provided or fed to the prediction algorithm 520. The prediction algorithm 520 processes the input data 521 and provides the processed data and the cell site database 511 as input to the trained machine learning model 500, which provides output data 522 that indicates whether tropospheric ducting event(s) are expected or predicted to impact the one or more cells. In other words, the prediction algorithm 520 refers to the solution of performing the prediction and potentially also one or more auxiliary actions, such as feature normalization.

In the inference phase, the input data 521 comprises at least weather forecast information for the area in which the one or more cells are located. The weather forecast information used in the inference phase may be different than the weather forecast information used in the training phase. That is, the same weather parameters may be used in both the training phase and in the inference phase, but the values of the parameters may be different.

The output data 522 may indicate a likelihood or probabilistic confidence of a level of remote interference expected to be caused by tropospheric ducting in the one or more cells 104B, 104C, 104D. For example, the output data 522 may comprise one of the following classifications (similar to the labels shown in FIG. 11) for each time interval (e.g., at an hourly level): "no interference", "likely interference", or "confirmed interference".

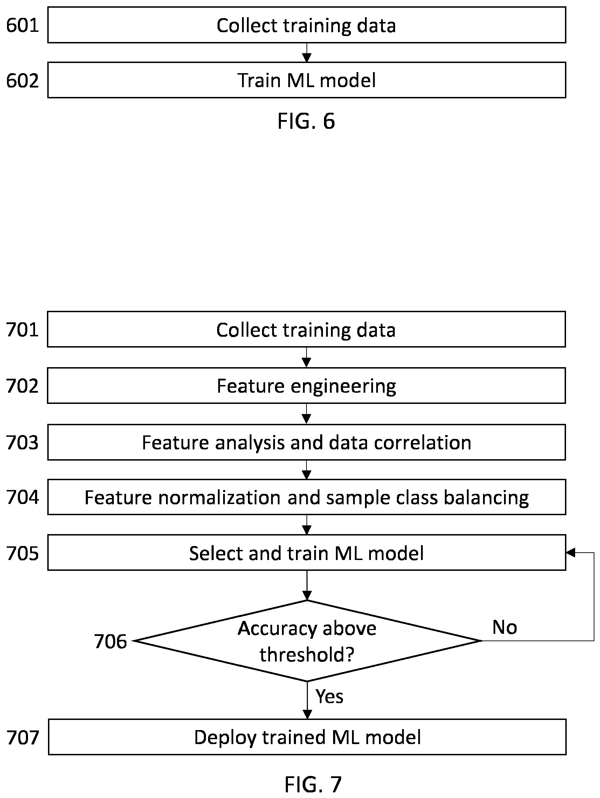

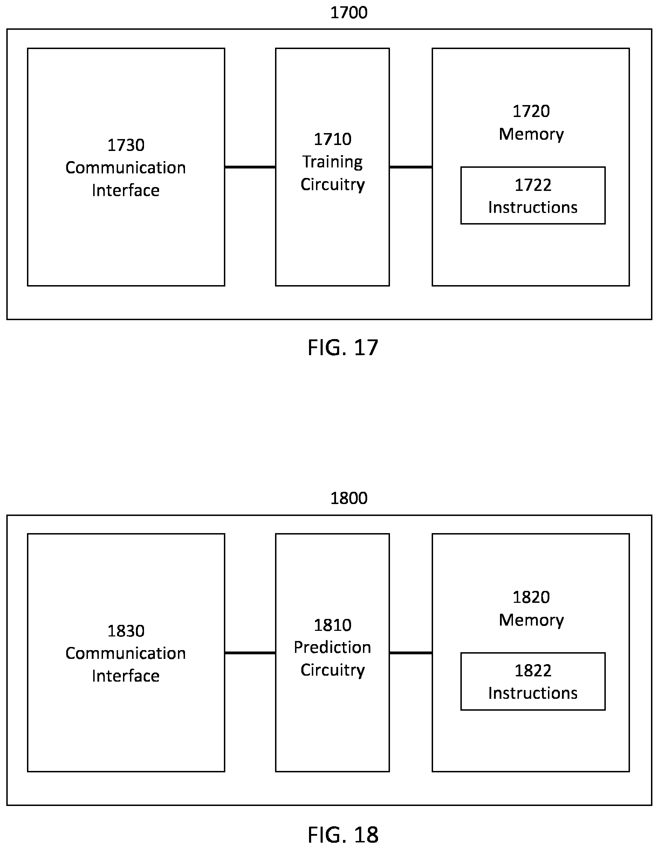

FIG. 6 illustrates a flow chart according to an example embodiment of a method for training a machine learning model (e.g., the machine learning model 500 of FIG. 5A) to predict tropospheric ducting events. The method of FIG. 6 may

EP 4 648 457 A1

be performed by an apparatus 1700 depicted in FIG. 17.

Referring to FIG. 6, in block 601, training data is collected, wherein the training data comprises at least: a cell site database (or cell site data) indicating a location and one or more configuration parameters (or parameter values) of one or more cells (e.g., cells 104B, 104C, 104D), weather forecast information for an area in which the one or more cells are located, and interference label data comprising one or more labels that indicate a probabilistic confidence of a level of remote interference caused by tropospheric ducting in the one or more cells. Herein the terms "cell" and "cell site" may be used interchangeably.

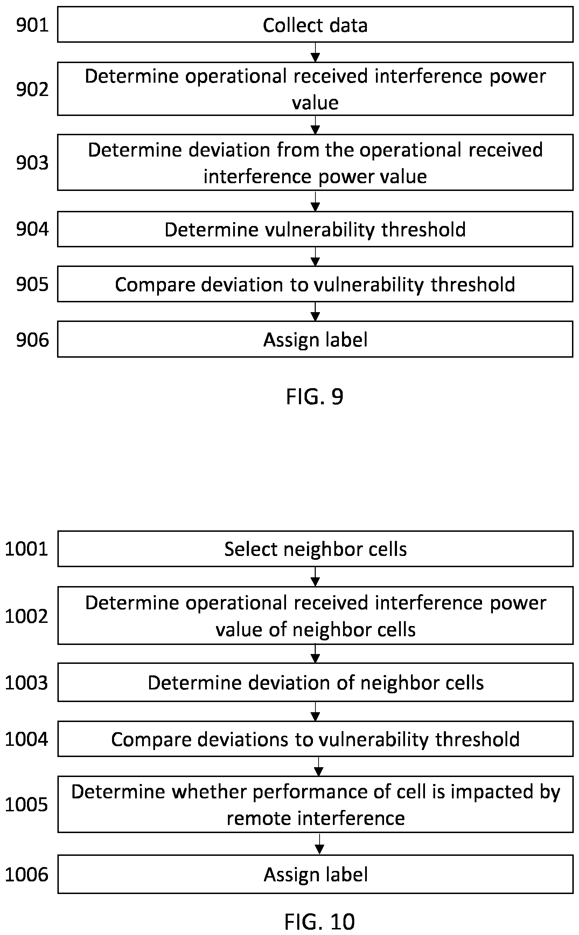

The interference label data may be generated, for example, as described below with reference to FIG. 9, FIG. 10 and/or FIG. 11. However, other ways of labelling the interference may also be possible, and thus the example embodiments are not limited to the methods of FIGS. 9 to 11.

In block 602, based on the training data, a machine learning model (e.g., the machine learning model 500 of FIG. 5A) is trained for predicting tropospheric ducting events impacting the one or more cells.

A training algorithm (e.g., a supervised learning algorithm such as a random forest algorithm) may be used to process the training data and train the machine learning model for predicting tropospheric ducting events impacting the one or more cells.

FIG. 7 illustrates a flow chart according to an example embodiment of a method for training a machine learning model to predict tropospheric ducting events. The method of FIG. 7 may be performed by an apparatus 1700 depicted in FIG. 17.

Referring to FIG. 7, in block 701, training data is collected, wherein the training data comprises at least: a cell site database indicating a location and one or more configuration parameters (or parameter values) of one or more cells, weather forecast information for an area in which the one or more cells are located, and interference label data comprising one or more labels that indicate a probabilistic confidence of a level of remote interference caused by tropospheric ducting in the one or more cells.

For example, the weather forecast information may be collected via the National Weather Service application programming interface (API) available in the United States, or via a similar service.

The data in the cell site database may be collected, for example, from the network operator controlling the one or more cells.

In block 702, feature engineering is performed to select relevant data from the cell site database and the weather forecast information.

As an example, the following data may be selected from the cell site database: latitude, longitude, channel bandwidth, antenna height, antenna azimuth, antenna beamwidth, antenna electrical tilt, and antenna mechanical tilt.

As an example, from the weather forecast information, the following data may be selected: temperature, probability of precipitation, relative humidity, wind speed, wind direction, shortForecast (i.e., descriptive weather forecast), and dew point.

In the feature engineering stage, the data may need to be treated. In case the weather forecast information comprises descriptive weather forecasts (i.e., shortForecast), then the description of the expected weather conditions may be converted from a text format to a set of numerical values by using a word embedding technique.

Word embedding is a technique used in natural language processing (NLP) to represent words in a continuous vector space. Each word is mapped to a vector of real numbers, capturing its semantic meaning based on its context in a large corpus of text. This allows words with similar meanings to have similar vector representations.

For example, the wind direction data may be text data such as N, NE, E, S, SE, SW, and the shortForecast may be "Slight Chance Showers And Thunderstorms", "Chance Showers And Thunderstorms", "Cloudy", "Sunny", etc. The word embedding technique may be used to convert the text information into vectors. For wind direction, a two-dimensional vector may be used: N=[1,0], S=[0,1], NE=[0.707, 0.707], etc. The shortForecast may be embedded into a one-dimensional vector using the word2vec algorithm or the bidirectional encoder representations from transformers (BERT) language model, for example. For example, the vectors for "clear skies" and "sunny" may be closer together than the vectors for "cloudy" and "rainy" (i.e., "cloudy" and "rainy" are more similar to each other than "cloudy" and "clear skies", for example).

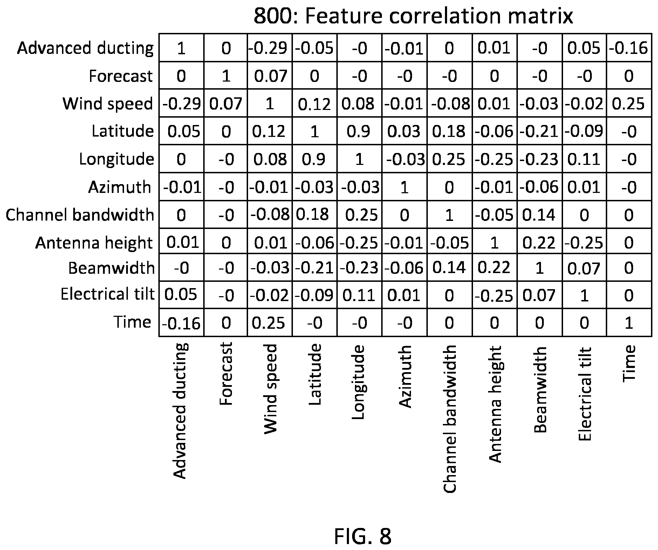

In block 703, the selected data undergoes feature analysis and correlation to identify patterns and relationships. The feature correlation analysis may be performed to ensure that no high feature correlations are present. For example, a feature correlation matrix (see FIG. 8) may be used to measure and visualize the relationships between different features (variables) in the dataset.

In block 704, feature normalization and sample class balancing is performed to ensure that the features are on a similar scale and to balance the classes, preventing model bias. For example, the StandardScaler technique may be used as the normalization technique, and SMOTE and underscaling may be used to adjust majority and/or minority classes. Class balancing may be necessary when dealing with unbalanced datasets. In case of tropospheric ducting, most data samples would not have remote interference, in comparison to the samples with tropospheric ducting. This imbalance may impair machine learning training. SMOTE and underscaling are examples of techniques for dealing with this data imbalance.

In block 705, an appropriate machine learning algorithm or model type is selected from a set of options depending on the complexity and nature of the data. The set of options may include, for example, at least: a linear support vector machine (SVM) algorithm, a multilayer perceptron (MLP), a deep neural network (DNN), a logistic classifier, a transformer model, and a random forest algorithm. For example, the random forest algorithm may be selected from the set of options.

Based on the interference label data, the cell site database, and the weather forecast information, the selected machine learning algorithm is used to train a machine learning model for predicting tropospheric ducting events impacting the one or more cells. This involves feeding the training data into the algorithm and adjusting the model's parameters to minimize prediction errors.

In block 706, the accuracy of the trained machine learning model is evaluated via a confusion matrix after the training is completed. A confusion matrix is a tool used to evaluate the performance of a classification model. The confusion matrix provides a detailed breakdown of the model's predictions compared to the actual outcomes. The confusion matrix helps in understanding the types of errors the model is making and provides insights into its accuracy, precision, recall, and F1 score. In other words, the confusion matrix is a tool for diagnosing the performance of a classification model and identifying areas for improvement.

Analysis of the trained model allows to determine the precision and recall. Precision answers the question: When detection is true, was there a matching remote interference likely or confirmed? Recall answers the question: When remote interference is likely or confirmed, is detection true? A final harmonic average between precision and recall provides a single comparing value called F1 score, which may be used to evaluate the accuracy of the trained machine learning model.

If the accuracy is not above the threshold (block 706: no), then the process returns to block 705, i.e., the machine learning model is retrained based on additional training data.

In block 707, based on determining that the accuracy is above the threshold according to the evaluation (block 706: yes), the (trained) machine learning model and the cell site database are deployed or transmitted to a self-organizing network 112 or to a non-real-time radio intelligent controller 221 or to a near-real-time radio intelligent controller after the training is completed.

FIG. 8 illustrates an example of a feature correlation matrix 800, which may be used in block 703 of FIG. 7. Each cell in the matrix represents the correlation coefficient between two features, which quantifies the degree to which they are linearly related. For example, the values may range from -1 to 1, where:

1 indicates a perfect positive correlation, meaning that as one feature increases, the other feature also increases proportionally.
-1 indicates a perfect negative correlation, meaning that as one feature increases, the other feature decreases proportionally.
0 indicates no linear correlation, meaning that changes in one feature do not predict changes in the other.

The feature correlation matrix helps to identify which features are strongly related to each other and which are not. Low feature correlation indicates that the features vary independently, which can be beneficial for the model as it reduces the risk of multicollinearity. This ensures that the model can better capture the unique contributions of each feature, leading to more accurate and reliable predictions of tropospheric ducting events. Understanding the correlations between features is beneficial for feature engineering and model training, as it helps in selecting the most relevant features and avoiding redundancy.

FIG. 9 illustrates a flow chart according to an example embodiment of a method for generating the interference label data (e.g., in block 601 of FIG. 6 or in block 701 of FIG. 7). The method of FIG. 9 may be performed by an apparatus 1700 depicted in FIG. 17.

Referring to FIG. 9, in block 901, radio measurement information and one or more performance metrics associated with one or more cells 104B, 104C, 104D are collected.

The radio measurement information and the one or more performance metrics may be collected or received from a plurality of base stations controlling the one or more cells 104B, 104C, 104D, or from a network management system (NMS) or SMO 220. The one or more cells (or base stations) 104B, 104C, 104D may be configured to apply time-division duplexing.

The radio measurement information may comprise, for example, at least a set of received interference power (RIP) values for each cell of the one or more cells over a time window, and a set of signal-to-interference-plus-noise ratio levels for each cell of the one or more cells over the time window. The time window may also be referred to as a training period herein.

The one or more performance metrics may comprise, for example, at least one of: a block error rate, a radio link failure rate, a random-access channel setup success ratio, an uplink data rate, an uplink spectral efficiency, or an uplink modulation coding scheme. The one or more performance metrics may also be referred to as one or more key performance indicators (KPIs) or performance information of the cell. The one or more performance metrics may be measured separately for each cell.

For example, the time window may comprise at least one week, and a granularity of the set of received interference power values and of the set of signal-to-interference-plus-noise ratio levels may be equal to or smaller than one hour. The granularity may also be referred to as a measurement period (i.e., the period of a single sample). For example, the radio measurement information and the one or more performance metrics may be collected on an hourly basis (or even every 15 minutes) over at least one or two weeks in order to collect a sufficient amount of data to determine the normal interference operation of the cell. However, it may also be possible to use a time window of less than one week and/or a granularity of over one hour.

In block 902, based on the radio measurement information, an operational received interference power value per a cell 104B of the one or more cells 104B, 104C, 104D is determined. The operational received interference power value indicates the normal interference operation of the cell.

For example, the determination of the operational received interference power value of the cell (104B) may comprise determining a measure of central tendency of the set of received interference power values of the cell 104B. The measure of central tendency is a statistical measure that identifies a single value as representative of an entire distribution. For example, the measure of central tendency may refer to the median, or the mean, or the mode of the set of received interference power values. As another example, the measure of central tendency may refer to a percentile distribution other than the median (e.g., the 30$^{th}$ percentile or the 75$^{th}$ percentile).

In other words, the normal cell operation may be determined by extracting, for example, the median or mean of the cell's received interference power data. The operational received interference power value may be calculated separately for each cell from the measured received interference power values of that specific cell (i.e., the median or mean may be calculated based on the data of a single cell).

In block 903, based on additional radio measurement information of the cell 104B, a deviation of the cell 104B from the operational received interference power value of the cell 104B is determined. The deviation may be denoted as DQ50 herein.

The additional radio measurement information may comprise one or more new received interference power values measured for the cell after the time window or training period (i.e., the new RIP measurements may be received after collecting the training data used for determining the operational received interference power value of the cell).

For example, the determination of the deviation of the cell 104B may comprise determining a difference between an average of the one or more new received interference power values of the cell 104B, and the operational received interference power value of the cell 104B.

This deviation identifies abnormalities from the normal interference level of the cell (i.e., from the operational received interference power value). The deviation may be determined separately for each cell based on the RIP measurements of the respective cell.

In block 904, a vulnerability threshold of the cell 104B is determined based at least on the radio measurement information and the one or more performance metrics of the cell (104B). The vulnerability threshold is a threshold above which the performance of the cell 104B is impacted by remote interference caused by tropospheric ducting.

For example, as explained below, the determination of the vulnerability threshold may be based at least on the set of signal-to-interference-plus-noise ratio levels and the one or more performance metrics of the cell 104B.

An operational uplink vulnerability level of the cell may be determined based on the set of signal-to-interference-plus-noise ratio levels. For example, the operational uplink radio frequency vulnerability level of the cell may be determined by determining a measure of central tendency of the set of signal-to-interference-plus-noise ratio levels of the cell. The measure of central tendency is a statistical measure that identifies a single value as representative of an entire distribution. For example, the measure of central tendency may refer to the median, or the mean, or the mode of the set of signal-to-interference-plus-noise ratio levels. As another example, the measure of central tendency may refer to a percentile distribution other than the median (e.g., the 30$^{th}$ percentile or the 75$^{th}$ percentile).

UL vulnerability is a measure of the percentage of traffic in the cell that will be impacted substantially by UL interference, preventing the UL from being reliable unless the interference is mitigated. One approach for quantifying the vulnerability is to look at the percentage of UL decodes that fall in a "marginal" UL signal-to-interference-plus-noise ratio (SINR) range - i.e., those that would fail to be reliable if UL interference caused significant further SINR reduction. This can be done, for example, as follows:

$$numerator\_cols = [UE\_SINR\_PUSCH\_R1\_LEVEL\_i \text{ for } i \text{ in } range(2, 9)]$$

$$denominator\_cols = [UE\_SINR\_PUSCH\_R1\_LEVEL\_j \text{ for } j \text{ in } range(2, 26)]$$

In the above example, the numerator is the sum total of UL SINR decodes that fall in the -10 to 0 dB range (note here that the lowest SINR bin is excluded as these are often cases where an UL grant was sent to the UE but the UE did not receive it and/or did not transmit on the UL, and therefore the measured SINR is very low due to absence of an actual signal - these are thus not cases that are UL interference driven, and should thus be excluded from the vulnerability metric).

The denominator is the sum total of all UL decodes, except for those in lowest SINR bin - for the same reason as the above - i.e., the UE did not transmit at all in these cases (bin1).

The above represents an illustrative example of the vulnerability calculation. The exact thresholds used for UL SINR may vary according to implementation, and other metrics than UL SINR (such as UL BLER, UL throughput, UL modulation and coding scheme) may be used instead of, or in addition to, UL SINR to establish the percentage of traffic that may suffer from an unreliable uplink if the UL interference from tropospheric ducting is unmitigated, and the degree of reliability impact for the same.

The operational vulnerability level of the cell may be analyzed for the one or more performance metrics of the cell, and a vulnerability mapping may be generated based on the analysis. The vulnerability mapping indicates a relationship between the one or more performance metrics of the cell, the operational uplink vulnerability level of the cell, and the deviation (DQ50) of the cell. For example, the vulnerability mapping may comprise a heatmap of the one or more performance metrics.

The vulnerability threshold of the cell may then be determined based on the vulnerability mapping. The vulnerability threshold is a cell-specific threshold above which the performance of the cell is deemed impacted (i.e., degraded) by remote interference. In other words, the vulnerability threshold indicates at what interference conditions the cell's performance is impacted or degraded. Less vulnerable cells are more resilient and can withstand higher interference before performance degradation is observed. The vulnerability threshold may be determined separately for each cell. The expected vulnerability operating level may be used to determine the vulnerability threshold above which the cell is classified as "under degrading interference". The vulnerability threshold may be a-priori determined via analytical analysis.

The determination of the vulnerability threshold may comprise determining the interference level at which the performance of a given cell is impacted or degraded, based on the vulnerability mapping (heatmap) of the operational uplink vulnerability levels, the one or more performance metrics and the normalized interference "DQ50". The objective is to obtain, for various ranges of vulnerability levels, the deviation "DQ50", in which the one or more performance metrics of the cell are visibly degrading, and this deviation DQ50 may then be set as the vulnerability threshold for that cell. In other words, the aim is to identify the point where UL reliability and performance will significantly suffer in the presence of additional (above normal) UL interference. These samples may be compared to all DQ50 samples obtained in such a cell.

In block 905, the deviation of the cell 104B is compared to the vulnerability threshold. If the deviation is above the threshold, then the performance of the cell 104B may be determined to be impacted by remote interference caused by tropospheric ducting. If the deviation is not above the threshold, then the performance of the cell 104B may be determined to not be impacted by the remote interference.

In block 906, based at least on the comparison of the deviation of the cell 104B to the vulnerability threshold, the cell 104B is assigned with a label from a plurality of pre-defined labels.

For example, the label (e.g., "no interference") may indicate that the performance of the cell (104B) is not impacted by the remote interference, based on the deviation of the cell (104B) not being above the vulnerability threshold.

As another example, the label may indicate that the performance of the cell (104B) is impacted by the remote interference, based on the deviation of the cell (104B) being above the vulnerability threshold.

FIG. 10 illustrates a flow chart according to an example embodiment of a method for establishing spatial contextualization. The method of FIG. 10 may be performed in block 906 of FIG. 9. The method of FIG. 10 may be performed by an apparatus 1700 depicted in FIG. 17.

Referring to FIG. 10, in block 1001, one or more neighbor cells of the cell 104B are selected based at least on a maximum distance from the cell 104B, such that a distance between the cell and the one or more neighbor cells is below or equal to the maximum distance. For example, the neigbor cells above the maximum distance may first be filtered out, and then a pre-defined number of the closest neighbor cells within the maximum distance may be selected. As a non-limiting example, up to 10 neighbor cells within 8 miles (approximately 12.87 kilometers) from the cell may be selected.

The selection of the one or more neighbor cells may be based further on a similarity between an antenna azimuth direction of the cell and an antenna azimuth direction of the one or more neighbor cells. In other words, one or more neighbor cells (or neighbor base stations) with the same or a similar antenna azimuth direction as the original cell (or base station) may be selected. For instance, sector 1 in the original cell (or the base station controlling the cell) may be pointing at 0 degrees, while sector 1 in a neighbor cell (or neighbor base station) may be pointing at 15 degrees, but this neighbor cell may still be selected due to having a similar azimuth, despite not having the exact same azimuth. These sectors may then be compared with each other.

This selection may be done to establish spatial contextualization, i.e., to evaluate the cell against its neighbor cell(s) covering the same or similar direction. Normal (non-ducting) interference originates in localized areas (e.g., from a concentration of UEs) and arrives at nearby base stations from different directions. Remote interference caused by tropospheric ducting, on the other hand, arrives from a distant source, such as the aggressor base station 104, and arrives at multiple victim base stations 104B, 104C, 104D from a similar direction (see FIG. 3). This unique characteristic of tropospheric ducting can be exploited via spatial contextualization to more accurately determine if the interference is caused by tropospheric ducting.

The spatial contextualization may be used to confirm the origin of the remote interference. Tropospheric ducting events appear in areas larger than a single base station's coverage area (i.e., cell). Correlating interference of neighboring cells bring causation to the likely victims. Therefore, one or more neighboring cells within a pre-determined radius may be selected and filtered based on an azimuth pointing in the same or similar direction as the potential victim cell currently under analysis.

In block 1002, based on the radio measurement information (e.g., the set of received interference power values) of the one or more neighbor cells, an operational received interference power value of (each of) the one or more neighbor cells is determined (e.g., by determining the measure of central tendency in a similar manner as explained above for FIG. 9). The set of received interference power values of a given neighbor cell may be averaged (e.g., on an hourly level), and then a measure of central tendency of all samples of that neighbor cell may be determined to indicate the normal interference for that neighbor cell.

In block 1003, based on additional radio measurement information of the one or more neighbor cells, a deviation of the one or more neighbor cells from the operational received interference power value of the one or more neighbor cells is determined (e.g., in a similar manner as described above for FIG. 9). In other words, the deviation of a given neighbor cell is calculated as a difference between the average of one or more new received interference power measurements of that neighbor cell, and the operational received interference power value of that neighbor cell (i.e., when new RIP measurements are received for a given neighbor cell, the average of the new RIP measurements are compared to the operational RIP value of that neighbor cell to determine the deviation).

If the one or more neighbor cells comprise more than one neighbor cell, then the deviation determined in block 1003 may comprise an average deviation of the neighbor cells. In other words, the deviation may be calculated individually for each cell, and then the average deviation may be calculated as an average of the individually calculated deviations.

In block 1004, the deviation of the cell and the deviation of (each of) the one or more neighbor cells are compared to the vulnerability threshold.

An offset may be applied to the vulnerability threshold for decreasing the vulnerability threshold for the one or more neighbor cells. In this case, the comparison of the deviation of (each of) the one or more neighbor cells may be done to the vulnerability threshold applied with the offset. In other words, the vulnerability threshold applied to the one or more neighbor cells may be smaller than the applied to the original cell. The one or more neighbor cells may comprise a variety of cells in different conditions, and therefore lowering the vulnerability threshold for the one or more neighbor cells may better reflect their interference situation.

In block 1005, based at least on the comparison, it is determined whether the performance of the cell is impacted by the remote interference caused by the tropospheric ducting.

In block 1006, the cell is assigned with a label from a plurality of pre-defined labels based at least on the comparison of the deviation of the cell to the vulnerability threshold, wherein the label indicates a probabilistic confidence of a level of the remote interference. The assigning of the label may be based further on the comparison of the deviation of (each of) the one or more neighbor cells to the vulnerability threshold.

For example, the plurality of pre-defined labels may comprise: a first label indicating that the performance of the cell is not impacted by the remote interference, based on the deviation of the cell not being above the vulnerability threshold; a second label indicating that the performance of the cell is likely impacted by the remote interference, based on the deviation of the cell being above the vulnerability threshold, and based on the deviation of the one or more neighbor cells not being above the vulnerability threshold; and a third label indicating that that the performance of the cell is confirmed to be impacted by the remote interference, based on the deviation of the cell being above the vulnerability threshold, and based on the deviation of the one or more neighbor cells being above the vulnerability threshold.

Out of all the likely victim cells (including the one or more neighbor cells), those with interference above the vulnerability threshold may be marked or labelled as confirmed victims (i.e., impacted by the remote interference).

FIG. 11 illustrates a flow chart according to an example embodiment of a method for assigning the label in block 1006 of FIG. 10. The method of FIG. 11 may be performed by an apparatus 1700 depicted in FIG. 17.

Referring to FIG. 11, in block 1101, the deviation of the cell is compared to the vulnerability threshold to determine whether the deviation of the cell is above the vulnerability threshold.

In block 1102, based on determining that the deviation of the cell is not above the vulnerability threshold (block 1101: no), the cell is assigned with a label indicating that the performance of the cell is not impacted by the remote interference, and that no mitigation is required. Based on this label, the apparatus 1700 may determine to refrain from mitigating the remote interference in the cell.

Alternatively, in block 1103, based on determining that the deviation of the cell is above the vulnerability threshold (block 1101: yes), it is determined whether the deviation of the one or more neighbor cells is available (i.e., whether an interference estimation of the one or more neighbor cells is available).

In block 1104, based on determining that the deviation of the cell is above the vulnerability threshold (block 1101: yes), and based on determining that the deviation of the one or more neighbor cells is not available (block 1103: no), the cell is assigned with a label indicating that the performance of the cell is confirmed to be impacted by the remote interference, and that mitigation is required. Based on this label, the apparatus 1700 may determine to mitigate the remote interference in the cell.

Alternatively, in block 1105, based on determining that the deviation of the one or more neighbor cells is available (block 1103: yes), it is determined whether the deviation of (each of) the one or more neighbor cells is above the vulnerability threshold. In other words, it is determined whether the one or more neighbor cells are impacted by the remote interference caused by the tropospheric ducting. In case the one or more neighbor cells comprise more than one neighbor cell, then the deviation used for the determination may comprise the average deviation of the neighbor cells.

In block 1106, based on determining that the deviation of the cell is above the vulnerability threshold (block 1101: yes), and based on determining that the deviation of the one or more neighbor cells is not above the vulnerability threshold (block 1105: no), the cell is assigned with a label indicating that the performance of the cell is likely impacted by the remote interference, and that mitigation of the remote interference is suggested. Based on this label, the apparatus 1700 may determine to mitigate the remote interference in the cell.

Alternatively, in block 1104, based on determining that the deviation of the cell is above the vulnerability threshold (block 1101: yes), and based on determining that the deviation of the one or more neighbor cells is above the vulnerability threshold (block 1105: yes), the cell is assigned with a label indicating that the performance of the cell is confirmed to be impacted by the remote interference, and that mitigation is required. Based on this label, the apparatus 1700 may determine to mitigate the remote interference in the cell.

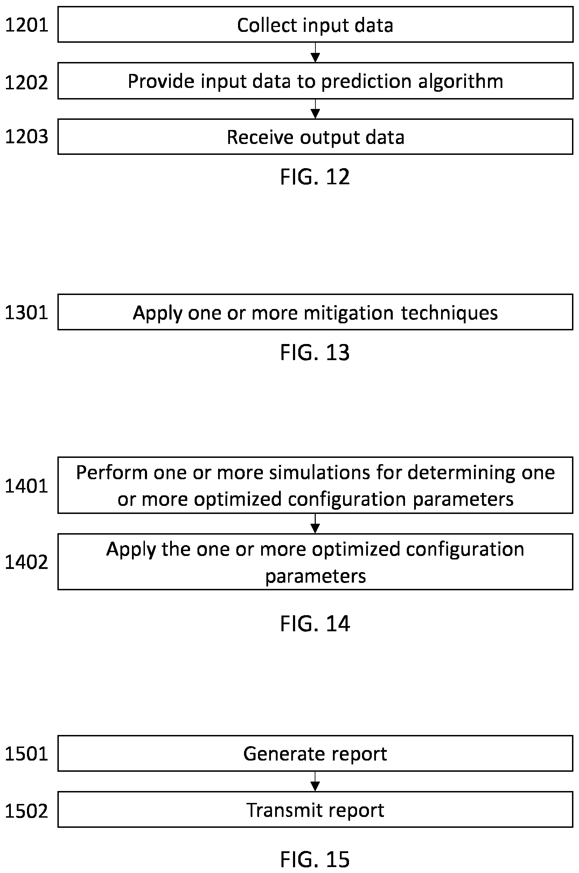

FIG. 12 illustrates a flow chart according to an example embodiment of a method for predicting tropospheric ducting events. The method of FIG. 12 may be performed by an apparatus 1800 depicted in FIG. 18.

Referring to FIG. 12, in block 1201, input data is collected, wherein the input data comprises at least weather forecast information for an area in which one or more cells (e.g., cells 104B, 104C, 104D) are located. Herein the terms "cell" and "cell site" may be used interchangeably.

For example, the weather forecast information may be collected via the National Weather Service application programming interface (API) available in the United States, or via a similar service.

The weather forecast information may comprise, for example, at least one of: temperature information, precipitation probability information, humidity information, wind speed information, wind direction information, dew point information, or a descriptive textual description of expected weather conditions.

In block 1202, the input data is provided to a prediction algorithm (e.g., the prediction algorithm 520 of FIG. 5B). The prediction algorithm comprises or includes a machine learning model (e.g., the model 500 of FIG. 5B) trained to predict tropospheric ducting events impacting the one or more cells (e.g., trained by the apparatus 1700 according the method of FIG. 6 or FIG. 7), and a cell site database indicating a location and one or more configuration parameters of the one or more cells. For example, the machine learning model may comprise a supervised learning model such as a random forest algorithm, or an artificial neural network, or any other suitable type of machine learning algorithm.

In case the weather forecast information comprises the description of the expected weather conditions, then the description of the expected weather conditions may be converted from a text format to a set of numerical values by using a word embedding technique. The set of numerical values may then be provided as input to the machine learning model (i.e., the set of numerical values may be included in the input data instead of the text description).

The one or more configuration parameters in the cell site database may comprise, for example, at least one of: channel bandwidth information of the one or more cells, antenna height information of the one or more cells, antenna azimuth information of the one or more cells, antenna beamwidth information of the one or more cells, an electrical tilt of one or more antennas of the one or more cells, or a mechanical tilt of the one or more antennas of the one or more cells.

In block 1203, the prediction algorithm processes the input data, and output data is received from the prediction algorithm, wherein the output data indicates one or more predicted tropospheric ducting events expected to impact the one or more cells based on the input data.

The output data may indicate a likelihood or probabilistic confidence of a level of remote interference expected to be caused by tropospheric ducting in the one or more cells. For example, the output data may comprise one of the following classifications (similar to the labels shown in FIG. 11) for each time interval (e.g., at an hourly level): "no interference", "likely interference", or "confirmed interference".

FIG. 13 illustrates a flow chart according to an example embodiment of a method for utilizing the prediction information. The method of FIG. 13 may be performed by an apparatus 1800 depicted in FIG. 18.

The method of FIG. 13 may be performed following the method of FIG. 12 (after block 1203).

Referring to FIG. 13, in block 1301, based on the output data, one or more mitigation techniques are applied for preventing performance degradation expected to be caused by the one or more predicted tropospheric ducting events in the one or more cells. In other words, the one or more mitigation techniques may be applied ahead of time in a proactive manner to prevent performance degradation before it occurs.

For example, the one or more mitigation techniques may comprise at least one of: muting (not transmitting) on some symbols or slots, reducing transmit power, or increasing antenna downtilt.

FIG. 14 illustrates a flow chart according to an example embodiment of a method for utilizing the prediction information. The method of FIG. 14 may be performed by an apparatus 1800 depicted in FIG. 18.

The method of FIG. 14 may be performed following the method of FIG. 12 (after block 1203). The method of FIG. 14 may be performed as an alternative or in addition to the method of FIG. 13.

Referring to FIG. 14, in block 1401, based on the output data, one or more simulations are performed for determining one or more optimized configuration parameters that minimize the impact of the one or more predicted tropospheric ducting events in the one or more cells. In other words, when a tropospheric ducting event is predicted, an optimization loop may be created by simulating or emulating potential network configuration changes and feeding them back to the model for evaluating potential performance improvements to find the configuration that minimizes the impact of the remote interference.

In block 1402, the one or more optimized configuration parameters are applied to the one or more cells.

For example, the one or more optimized configuration parameters may comprise at least one of: channel bandwidth, antenna height, antenna azimuth, antenna beamwidth, an electrical tilt of the one or more antennas, or a mechanical tilt of the one or more antennas.

FIG. 15 illustrates a flow chart according to an example embodiment of a method for utilizing the prediction information. The method of FIG. 15 may be performed by an apparatus 1800 depicted in FIG. 18.

The method of FIG. 15 may be performed following the method of FIG. 12 (after block 1203). The method of FIG. 15 may be performed as an alternative or in addition to the method of FIG. 13 and/or the method of FIG. 14.

Referring to FIG. 15, in block 1501, a report (message) is generated, wherein the report (message) comprises information related to the one or more predicted tropospheric ducting events. For example, the report may be generated by using a large language model (LLM), such as Llama or any other LLM, that takes the output data of the machine learning model (ducting predictor) as input. The LLM may take the prompt of the table of the amount of cells predicted to be impacted by tropospheric ducting in a given market or area and compare it to one or more pre-defined thresholds.

As an example, if less than 5 % of cells in a given area (e.g., in Dallas) are predicted to be impacted by tropospheric ducting, the LLM may generate a report stating that there are no ducting issues in that area.

As another example, if 5 to 15 % of cells in a given area are predicted to be impacted by tropospheric ducting, the LLM may generate a report stating that there are mild ducting issues in that area.

As another example, if 15 to 30 % of cells in a given area are predicted to be impacted by tropospheric ducting, the LLM may generate a report stating that there are moderate ducting issues in that area.

As another example, if more than 30 % of cells in a given area are predicted to be impacted by tropospheric ducting, the LLM may generate a report stating that there are severe ducting issues in that area.

It should be noted that the above thresholds can be adjusted as needed (e.g., based on customer expectations).

In block 1502, the report (message) is transmitted to one or more receivers (i.e., to one or more other devices, such as one or more UEs 100, 102).

An example of the report is presented in Table 1 below.

Table 1. Example report on ducting issues across various markets.

| Date: | October 10, 2023 |
|---|---|
| Current status (tonight): | There are mild ducting issues reported in the Mobile market. |
| Tomorrow's forecast: | Mobile is expected to continue experiencing mild ducting issues |
| Thursday, October 12, 2023: | The Dallas market is projected to face mild ducting issues |
| Friday, October 13, 2023: | Austin is anticipated to face extreme ducting issues. Mobile will encounter strong ducting problems. Birmingham is set to experience moderate ducting issues. Meanwhile, Oklahoma City, Dallas, Houston, and Memphis will all see mild ducting issues. |
| Saturday, October 14, 2023: | Birmingham is predicted to face moderate ducting problems. Both Austin and Mobile are projected to experience mild ducting issues. |
| Additional notes: | It is reassuring to mention that all other markets remain free from any ducting disturbances at this time. |

The blocks, related functions, and information exchanges (messages) described above by means of FIGS. 6, 7, and 9 to 15 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the terms "the at least one" and "the one or more" mean "any one of the at least one" and "any one of the one or more", respectively.

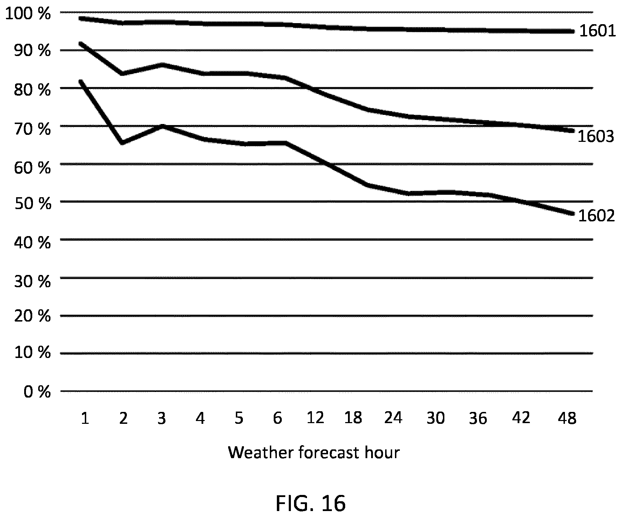

FIG. 16 illustrates class prediction F1 score for weather forecasted data achieved with the trained ducting predictor. The F1 score is a measure of the model's accuracy, specifically in the context of classification tasks. It is the harmonic mean of precision and recall, providing a single metric that balances both concerns.

In FIG. 16, the F1 scores are provided for different forecast hours, indicating how well the model performs in predicting tropospheric ducting events over time. The curve 1601 indicates the F1 score for the "no interference" classification (class 0). The curve 1602 indicates the F1 score for the "likely interference" classification (class 1). The curve 1603 indicates the F1 score for the "confirmed interference" classification (class 2).

FIG. 16 is evidence that a machine learning model can be trained to predict tropospheric ducting events. Higher F1 scores indicate better performance, with the model achieving an averaged F1 score of 97% for the first hour, which means it is highly accurate in its predictions shortly after the forecast. The classification prediction for the first six hours has an averaged F1-score of 93.4 %. However, the F1 score tends to degrade as the forecast period extends, reflecting the increasing difficulty of making accurate predictions further into the future.

The class-specific results show:

Table 2.

| Class | Precision | Recall | F1-score |
|---|---|---|---|
| 0 | 98.3 % | 98.6 % | 98.4 % |
| 1 | 86.0 % | 77.8 % | 81.7 % |
| 2 | 91.5 % | 91.9 % | 91.7 % |

The precision measures the accuracy of the positive predictions. It answers the question: When there is a ducting prediction, was there a remote interference (ducting) issue?

Recall measures the ability of the model to find all the relevant positive cases. It answers the question: was there a ducting prediction triggered every time when there was remote interference (ducting) issue?

FIG. 17 illustrates an example of an apparatus 1700 comprising means for causing the apparatus 1700 to perform one or more of the example embodiments described above (e.g., any of the methods of FIGS. 6, 7 and 9 to 11). The apparatus 1700 may be, or comprise, or be comprised in, a computer or any other computing device suitable for training machine learning models. In other words, the apparatus 1700 may comprise a machine learning trainer entity used to train machine learning models.

The apparatus 1700 may comprise, for example, a circuitry or a chipset applicable for realizing one or more of the example embodiments described above. The apparatus 1700 may be an electronic device or computing system comprising one or more electronic circuitries. The apparatus 1700 may comprise a training circuitry 1710 such as atleast one processor, and at least one memory 1720 storing instructions 1722 which, when executed by the at least one processor, cause the apparatus 1700 to carry out one or more of the example embodiments described above. Such instructions 1722 may, for example, include computer program code (software). The at least one processor and the atleast one memory storing the instructions may provide the means for providing or causing the performance of any of the methods and/or blocks described above.

The processor is coupled to the memory 1720. The processor is configured to read and write data to and from the memory 1720. The memory 1720 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1720 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1720 or, alternatively or additionally, they may be received, by the apparatus, via an electromagnetic carrier signal and/or may be copied from a physical entity such as a computer program product. Execution of the computer readable instructions causes the apparatus 1700 to perform one or more of the functionalities described above.

The memory 1720 may be implemented using any suitable data storage technology, such as semiconductor-based memory devices, flash memory, magnetic memory devices and systems, optical memory devices and systems, fixed memory and/or removable memory.

The apparatus 1700 may further comprise or be connected to a communication interface 1730 comprising hardware and/or software for realizing communication connectivity according to one or more communication protocols. The communication interface 1730 may comprise at least one transmitter (Tx) and at least one receiver (Rx) that may be integrated to the apparatus 1700 or that the apparatus 1700 may be connected to. The communication interface 1730 may provide means for performing some of the blocks and/or functions (e.g., transmitting and receiving) for one or more example embodiments described above. The communication interface 1730 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1730 provides the apparatus with communication capabilities to communicate in the wireless communication network. The communication interface 1730 may, for example, provide a radio, cable or fiber interface to one or more base stations 104, 104B, 104C, 104D of a radio access network, and/or to a central entity such as an SMO 220.

It is to be noted that the apparatus 1700 may further comprise various components not illustrated in FIG. 17. The various components may be hardware components and/or software components.

FIG. 18 illustrates an example of an apparatus 1800 comprising means for causing the apparatus 1800 to perform one or more of the example embodiments described above (e.g., any of the methods of FIGS. 12 to 15). The apparatus 1800 may be, or comprise, or be comprised in, a network entity such as base station 104, 104B, 104C, 104D, or a non-real-time radio intelligent controller 221, or a near-real-time radio intelligent controller 210, or a self-organizing network 112. The term "radio intelligent controller" may also be referred to as a "radio access network intelligent controller".

The apparatus 1800 may comprise, for example, a circuitry or a chipset applicable for realizing one or more of the example embodiments described above. The apparatus 1800 may be an electronic device or computing system comprising one or more electronic circuitries. The apparatus 1800 may comprise a prediction circuitry 1810 such as atleast one processor, and at least one memory 1820 storing instructions 1822 which, when executed by the at least one processor, cause the apparatus 1800 to carry out one or more of the example embodiments described above. Such instructions 1822 may, for example, include computer program code (software). The at least one processor and the atleast one memory storing the instructions may provide the means for providing or causing the performance of any of the methods and/or blocks described above.

In another embodiment, the means may be a network function of the core network, or the means may be network function virtualization infrastructure.

The processor is coupled to the memory 1820. The processor is configured to read and write data to and from the memory 1820. The memory 1820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1820 or, alternatively or additionally, they may be received, by the apparatus, via an electromagnetic carrier signal and/or may be copied from a physical entity such as a computer program product. Execution of the computer readable instructions causes the apparatus 1800 to perform one or more of the functionalities described above.

The memory 1820 may be implemented using any suitable data storage technology, such as semiconductor-based memory devices, flash memory, magnetic memory devices and systems, optical memory devices and systems, fixed memory and/or removable memory.

The apparatus 1800 may further comprise or be connected to a communication interface 1830 comprising hardware and/or software for realizing communication connectivity according to one or more communication protocols. The communication interface 1830 may comprise at least one transmitter (Tx) and at least one receiver (Rx) that may be integrated to the apparatus 1800 or that the apparatus 1800 may be connected to. The communication interface 1830 may provide means for performing some of the blocks and/or functions (e.g., transmitting and receiving) for one or more example embodiments described above. The communication interface 1830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1830 provides the apparatus with communication capabilities to communicate in the wireless communication network. The communication interface 1830 may, for example, provide a radio, cable or fiber interface to one or more base stations 104, 104B, 104C, 104D of a radio access network, and/or to a central entity such as an SMO 220.

It is to be noted that the apparatus 1800 may further comprise various components not illustrated in FIG. 18. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

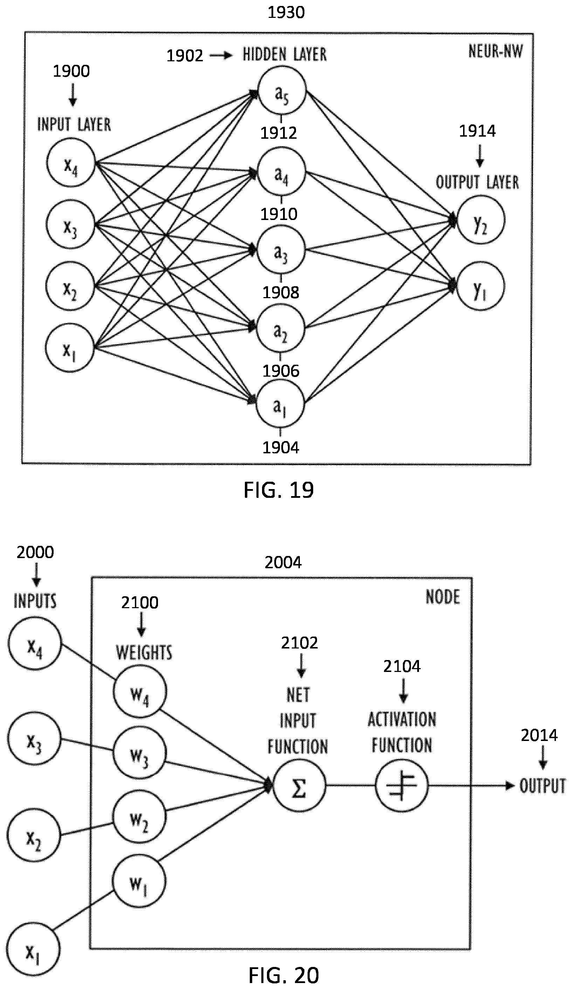

FIG. 19 illustrates an example of an artificial neural network 1930 with one hidden layer 1902, and FIG. 20 illustrates an example of a computational node 1904. However, it should be noted that the artificial neural network 1930 may also comprise more than one hidden layer 1902. The artificial neural network 1930 shown in FIG. 19 is one example of the machine learning model (ducting predictor) 500 described above.

An artificial neural network (ANN) 1930 comprises a set of rules that are designed to execute tasks such as regression, classification, clustering, and pattern recognition. The ANN may achieve such objectives with a learning/training procedure, where they are shown various examples of input data, along with the desired output. This way, the ANN learns to identify the proper output for any input within the training data manifold. Learning/training by using labels is called supervised learning and learning without labels is called unsupervised learning.

Deep learning (also known as deep structured learning or hierarchical learning) is part of a broader family of machine learning methods based on the layers used in the artificial neural network. A deep neural network (DNN) 1930 is an artificial neural network comprising multiple hidden layers 1902 between the input layer 1900 and the output layer 1914. Training of DNN allows it to find the correct mathematical manipulation to transform the input into the proper output, even when the relationship is highly non-linear and/or complicated. Deep learning may require a large amount of input data.

A given hidden layer 1902 comprises nodes 1904, 1906, 1908, 1910, 1912, where the computation takes place. As shown in FIG. 20, a given node 1904 combines input data 1900 with a set of coefficients, or weights 2000, that either amplify or dampen that input 1900, thereby assigning significance to inputs 1900 with regard to the task that the algorithm is trying to learn. The input-weight products are added 2002 and the sum is passed through an activation function 2004, to determine whether and to what extent that signal should progress further through the neural network 1930 to affect the ultimate outcome, such as an act of classification. In the process, the neural network learns to recognize correlations between certain relevant features and optimal results.

In the case of classification, the output of a DNN 1930 may be considered as a likelihood of a particular outcome. In this case, the number of layers 1902 may vary proportional to the number of the used input data 1900. However, when the number of input data 1900 is high, the accuracy of the outcome 1914 is more reliable. On the other hand, when there are fewer layers 1902, the computation might take less time and thereby reduce the latency. However, this highly depends on the specific DNN architecture and/or the computational resources available.

Initial weights 2000 of the model can be set in various alternative ways. During the training phase, they may be adapted to improve the accuracy of the process based on analyzing errors in decision-making. Training a model is basically a trial-and-error activity. In principle, a given node 1904, 1906, 1908, 1910, 1912 of the neural network 1930 makes a decision (input*weight) and then compares this decision to collected data to find out the difference to the collected data. In other words, it determines the error, based on which the weights 2000 are adjusted. Thus, the training of the model may be considered a corrective feedback loop.

For example, a neural network model may be trained using a stochastic gradient descent optimization algorithm, for which the gradients are calculated using the backpropagation algorithm. The gradient descent algorithm seeks to change the weights 2000, so that the next evaluation reduces the error, meaning that the optimization algorithm is navigating down the gradient (or slope) of error. It is also possible to use any other suitable optimization algorithm, if it provides sufficiently accurate weights 2000. Consequently, the trained parameters of the neural network 1930 may comprise the weights 2000.

In the context of an optimization algorithm, the function used to evaluate a candidate solution (i.e., a set of weights) is referred to as the objective function. With neural networks, where the target is to minimize the error, the objective function may be referred to as a cost function or a loss function. In adjusting weights 2000, any suitable method may be used as a loss function. Some examples of a loss function are mean squared error (MSE), maximum likelihood estimation (MLE), and cross entropy.

As for the activation function 2004 of the node 1904, it defines the output 1914 of that node 1904 given an input or set of inputs 1900. The node 1904 calculates a weighted sum of inputs, perhaps adds a bias, and then makes a decision as "activate" or "not activate" based on a decision threshold as a binary activation or using an activation function 2004 that gives a nonlinear decision function. Any suitable activation function 2004 may be used, for example sigmoid, rectified linear unit (ReLU), normalized exponential function (softmax), sotfplus, tanh, etc. In deep learning, the activation function 2004 may be set at the layer level and applies to all neurons (nodes) in that layer. The output 1914 is then used as input for the next node and so on until a desired solution to the original problem is found.

It will be understandable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1.  An apparatus (1800) comprising at least one processor (1810), and at least one memory (1820) storing instructions (1822) that, when executed by the at least one processor, cause the apparatus (1800) at least to:

    collect input data (521) comprising at least weather forecast information for an area in which one or more cells (104B, 104C, 104D) are located;
    provide the input data (521) to a prediction algorithm (520), wherein the prediction algorithm (520) comprises:

    a machine learning model (500) trained to predict tropospheric ducting events impacting the one or more cells (104B, 104C, 104D), and
    a cell site database (511) indicating a location and one or more configuration parameters of the one or more cells (104B, 104C, 104D); and

    receive, from the prediction algorithm (520), output data (522) indicating one or more predicted tropospheric ducting events expected to impact the one or more cells (104B, 104C, 104D) based on the input data (521).

2. The apparatus (1800) of claim 1, further being caused to:
apply, based on the output data (522), one or more mitigation techniques for preventing performance degradation expected to be caused by the one or more predicted tropospheric ducting events in the one or more cells (104B, 104C, 104D).

3. The apparatus (1800) of claim 1 or 2, further being caused to:

perform, based on the output data (522), one or more simulations for determining one or more optimized configuration parameters that minimize the impact of the one or more predicted tropospheric ducting events in the one or more cells (104B, 104C, 104D); and
apply the one or more optimized configuration parameters to the one or more cells (104B, 104C, 104D).

4. The apparatus (1800) of any of claims 1 to 3, further being caused to:

generate a report comprising information related to the one or more predicted tropospheric ducting events; and
transmit the report to one or more receivers.

5. An apparatus (1700) comprising at least one processor (1710), and at least one memory (1720) storing instructions that, when executed by the at least one processor (1710), cause the apparatus (1700) at least to:

collect training data (510) comprising at least:

a cell site database (511) indicating a location and one or more configuration parameters of one or more cells (104B, 104C, 104D),
weather forecast information (512) for an area in which the one or more cells (104B, 104C, 104D) are located, and
interference label data (513) comprising one or more labels that indicate a probabilistic confidence of a level of remote interference caused by tropospheric ducting in the one or more cells (104B, 104C, 104D); and

train a machine learning model (500) based on the training data for predicting tropospheric ducting events impacting the one or more cells (104B, 104C, 104D).

6. The apparatus (1700) of claim 5, further being caused to:
deploy the machine learning model (500) to a self-organizing network (112) or to a non-real-time radio intelligent controller (221) or to a near-real-time radio intelligent controller (210) after the training is completed.

7. The apparatus (1700) of claim 6, further being caused to:

evaluate an accuracy of the machine learning model (500) via a confusion matrix after the training is completed, wherein the machine learning model (500) is deployed based on determining that the accuracy is above a threshold according to the evaluation.

8. The apparatus (1700) of any of claims 5 to 7, further being caused to:

generate the interference label data (513), wherein the generation of the interference label data (513) comprises at least:
collecting radio measurement information and one or more performance metrics associated with the one or more cells (104B, 104C, 104D);
determining, based on the radio measurement information, an operational received interference power value per a cell of the one or more cells (104B, 104C, 104D);
determining, based on additional radio measurement information of the cell, a deviation of the cell from the operational received interference power value;
determining, based at least on the radio measurement information and the one or more performance metrics of the cell, a vulnerability threshold above which a performance of the cell is impacted by the remote interference caused by the tropospheric ducting;
comparing the deviation of the cell to the vulnerability threshold; and
assigning the cell with a label from a plurality of pre-defined labels based at least on the comparison of the deviation of the cell to the vulnerability threshold,

wherein the label indicates the probabilistic confidence of the level of the remote interference in the cell.

9.  The apparatus (1700) of claim 8, further being caused to:

> determine, based on the radio measurement information, an operational received interference power value of one or more neighbor cells of the cell;
> determine, based on additional radio measurement information of the one or more neighbor cells, a deviation of the one or more neighbor cells from the operational received interference power value of the one or more neighbor cells; and
> compare the deviation of the one or more neighbor cells to the vulnerability threshold,
> wherein the label is assigned based further on the comparison of the deviation of the one or more neighbor cells to the vulnerability threshold.

10. The apparatus (1700) of claim 9, further being caused to:

> select the one or more neighbor cells based at least on a maximum distance from the cell, such that a distance between the cell and the one or more neighbor cells is below or equal to the maximum distance,
> wherein the selection of the one or more neighbor cells is based further on a similarity between an antenna azimuth direction of the cell and an antenna azimuth direction of the one or more neighbor cells.

11. A method comprising:

> collecting (1201) input data (521) comprising at least weather forecast information for an area in which one or more cells (104B, 104C, 104D) are located;
> providing (1202) the input data (521) to a prediction algorithm (520), wherein the prediction algorithm (520) comprises:
>
> > a machine learning model (500) trained to predict tropospheric ducting events impacting the one or more cells (104B, 104C, 104D), and
> > a cell site database (511) indicating a location and one or more configuration parameters of the one or more cells (104B, 104C, 104D); and
>
> receiving (1203), from the prediction algorithm (520), output data (522) indicating one or more predicted tropospheric ducting events expected to impact the one or more cells (104B, 104C, 104D) based on the input data (521).

12. A method comprising:

> collecting (601, 701) training data (510) comprising at least:
>
> > a cell site database (511) indicating a location and one or more configuration parameters of one or more cells (104B, 104C, 104D),
> > weather forecast information (512) for an area in which the one or more cells (104B, 104C, 104D) are located, and
> > interference label data (513) comprising one or more labels that indicate a probabilistic confidence of a level of remote interference caused by tropospheric ducting in the one or more cells (104B, 104C, 104D); and
>
> training (602, 705) a machine learning model (500) based on the training data (510) for predicting tropospheric ducting events impacting the one or more cells (104B, 104C, 104D).

13. A non-transitory computer readable medium comprising program instructions which, when executed by an apparatus (1800), cause the apparatus (1800) to perform at least the following:

> collecting input data (521) comprising at least weather forecast information for an area in which one or more cells (104B, 104C, 104D) are located;
> providing the input data (521) to a prediction algorithm (520), wherein the prediction algorithm (520) comprises:
>
> > a machine learning model (500) trained to predict tropospheric ducting events impacting the one or more cells (104B, 104C, 104D), and
a cell site database (511) indicating a location and one or more configuration parameters of the one or more cells (104B, 104C, 104D); and

receiving, from the prediction algorithm (520), output data (522) indicating one or more predicted tropospheric ducting events expected to impact the one or more cells (104B, 104C, 104D) based on the input data (521).

14. A non-transitory computer readable medium comprising program instructions which, when executed by an apparatus (1700), cause the apparatus (1700) to perform at least the following:

collecting training data (510) comprising at least:

a cell site database (511) indicating a location and one or more configuration parameters of one or more cells (104B, 104C, 104D),
weather forecast information (512) for an area in which the one or more cells (104B, 104C, 104D) are located, and
interference label data (513) comprising one or more labels that indicate a probabilistic confidence of a level of remote interference caused by tropospheric ducting in the one or more cells (104B, 104C, 104D); and

training a machine learning model (500) based on the training data (510) for predicting tropospheric ducting events impacting the one or more cells (104B, 104C, 104D).

15. A system comprising at least a machine learning trainer entity (1700) and a network entity (104, 112, 210, 221, 1800); wherein the machine learning trainer entity (1700) is configured to:

collect training data (510) comprising at least:

a cell site database (511) indicating a location and one or more configuration parameters of one or more cells (104B, 104C, 104D),
weather forecast information (512) for an area in which the one or more cells (104B, 104C, 104D) are located, and
interference label data (513) comprising one or more labels that indicate a probabilistic confidence of a level of remote interference caused by tropospheric ducting in the one or more cells (104B, 104C, 104D); and

train a machine learning model (500) based on the training data for predicting tropospheric ducting events impacting the one or more cells (104B, 104C, 104D);
wherein the network entity (104, 112, 210, 221, 1800) is configured to:
collect input data (521) comprising at least weather forecast information for the area in which the one or more cells (104B, 104C, 104D) are located;
provide the input data (521) to a prediction algorithm (520), wherein the prediction algorithm (520) comprises:

the machine learning model (500) trained to predict tropospheric ducting events impacting the one or more cells (104B, 104C, 104D), and
the cell site database (511) indicating the location and the one or more configuration parameters of the one or more cells (104B, 104C, 104D); and

receive, from the prediction algorithm (520), output data (522) indicating one or more predicted tropospheric ducting events expected to impact the one or more cells (104B, 104C, 104D) based on the input data (521).

FIG. 1

FIG. 2

FIG. 3

FIG. 4

**510: Training data**

- 513: Interference label data →
- 512: Weather forecast data →
- 511: Cell site database →

**500: ML model**

**FIG. 5A**

**520: Prediction algorithm**

521: Weather forecast data →

511: Cell site database →

**500: Trained ML model**

→ 522: Ducting prediction

**FIG. 5B**

601 | Collect training data

602 | Train ML model

FIG. 6

701 | Collect training data

702 | Feature engineering

703 | Feature analysis and data correlation

704 | Feature normalization and sample class balancing

705 | Select and train ML model

706 | Accuracy above threshold?

No

Yes

707 | Deploy trained ML model

FIG. 7

## 800: Feature correlation matrix

| | Advanced ducting | Forecast | Wind speed | Latitude | Longitude | Azimuth | Channel bandwidth | Antenna height | Beamwidth | Electrical tilt | Time |
|---|---|---|---|---|---|---|---|---|---|---|---|
| Advanced ducting | 1 | 0 | -0.29 | -0.05 | -0 | -0.01 | 0 | 0.01 | -0 | 0.05 | -0.16 |
| Forecast | 0 | 1 | 0.07 | 0 | -0 | -0 | -0 | 0 | -0 | -0 | 0 |
| Wind speed | -0.29 | 0.07 | 1 | 0.12 | 0.08 | -0.01 | -0.08 | 0.01 | -0.03 | -0.02 | 0.25 |
| Latitude | 0.05 | 0 | 0.12 | 1 | 0.9 | 0.03 | 0.18 | -0.06 | -0.21 | -0.09 | -0 |
| Longitude | 0 | -0 | 0.08 | 0.9 | 1 | -0.03 | 0.25 | -0.25 | -0.23 | 0.11 | -0 |
| Azimuth | -0.01 | -0 | -0.01 | -0.03 | -0.03 | 1 | 0 | -0.01 | -0.06 | 0.01 | -0 |
| Channel bandwidth | 0 | -0 | -0.08 | 0.18 | 0.25 | 0 | 1 | -0.05 | 0.14 | 0 | 0 |
| Antenna height | 0.01 | 0 | 0.01 | -0.06 | -0.25 | -0.01 | -0.05 | 1 | 0.22 | -0.25 | 0 |
| Beamwidth | -0 | -0 | -0.03 | -0.21 | -0.23 | -0.06 | 0.14 | 0.22 | 1 | 0.07 | 0 |
| Electrical tilt | 0.05 | -0 | -0.02 | -0.09 | 0.11 | 0.01 | 0 | -0.25 | 0.07 | 1 | 0 |
| Time | -0.16 | 0 | 0.25 | -0 | -0 | -0 | 0 | 0 | 0 | 0 | 1 |

## FIG. 8

| 901 | Collect data |
|---|---|
| 902 | Determine operational received interference power value |
| 903 | Determine deviation from the operational received interference power value |
| 904 | Determine vulnerability threshold |
| 905 | Compare deviation to vulnerability threshold |
| 906 | Assign label |

FIG. 9

| 1001 | Select neighbor cells |
|---|---|
| 1002 | Determine operational received interference power value of neighbor cells |
| 1003 | Determine deviation of neighbor cells |
| 1004 | Compare deviations to vulnerability threshold |
| 1005 | Determine whether performance of cell is impacted by remote interference |
| 1006 | Assign label |

FIG. 10

FIG. 11

| 1201 | Collect input data |
|---|---|
| 1202 | Provide input data to prediction algorithm |
| 1203 | Receive output data |

FIG. 12

| 1301 | Apply one or more mitigation techniques |
|---|---|

FIG. 13

| 1401 | Perform one or more simulations for determining one or more optimized configuration parameters |
|---|---|
| 1402 | Apply the one or more optimized configuration parameters |

FIG. 14

| 1501 | Generate report |
|---|---|
| 1502 | Transmit report |

FIG. 15

FIG. 16

1700

FIG. 17

1800

FIG. 18

FIG. 19

FIG. 20

EP 4 648 457 A1

Europäisches Patentamt
European Patent Office
Office européen des brevets

# EUROPEAN SEARCH REPORT

**Application Number**

EP 25 17 4163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NATCHIAPPAN VENKATACHALAM ET AL: "Remote Interference Detection and Mitigation in RAPPS Paradigm", 2024 16TH INTERNATIONAL CONFERENCE ON COMMUNICATION SYSTEMS & NETWORKS (COMSNETS), IEEE, 3 January 2024 (2024-01-03), pages 676-680, XP034547805, DOI: 10.1109/COMSNETS59351.2024.10426786 [retrieved on 2024-02-16] | 1-4,11, 13 | INV. H04W16/14 G06N7/00 G06N20/00 ADD. G01W1/10 |
| A | * abstract * * * page 677, left-hand column, paragraph 2 - right-hand column, paragraph 5 * * page 677, right-hand column, paragraph C * * page 679, left-hand column, paragraph 2 * * page 679, right-hand column, paragraph 2 * ----- | 5-10,12, 14,15 | |
| X | US 2024/089751 A1 (KUMAR SHAILESH [IN] ET AL) 14 March 2024 (2024-03-14) | 1-4,11, 13 | TECHNICAL FIELDS SEARCHED (IPC) |
| A | * paragraph [0124] - paragraph [0126] * * paragraph [0120] * ----- | 5-10,12, 14,15 | H04W G01W G06N |
| A | US 2020/344619 A1 (GORMLEY EAMONN [US] ET AL) 29 October 2020 (2020-10-29) * paragraph [0049] * * paragraph [0055] * ----- | 1-15 | |

The present search report has been drawn up for all claims

| Place of search | Date of completion of the search | Examiner |
|---|---|---|
| Berlin | 20 August 2025 | Farese, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

38

## ANNEX TO THE EUROPEAN SEARCH REPORT
## ON EUROPEAN PATENT APPLICATION NO.

EP 25 17 4163

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2025

| Patent document cited in search report | | Publication date | Patent family member(s) | | Publication date |
|---|---|---|---|---|---|
| US 2024089751 | A1 | 14-03-2024 | CN | 116671040 A | 29-08-2023 |
| | | | EP | 4211827 A1 | 19-07-2023 |
| | | | JP | 2024529807 A | 14-08-2024 |
| | | | KR | 20230132435 A | 15-09-2023 |
| | | | US | 2024089751 A1 | 14-03-2024 |
| | | | WO | 2023007420 A1 | 02-02-2023 |
| US 2020344619 | A1 | 29-10-2020 | US | 2020344619 A1 | 29-10-2020 |
| | | | WO | 2021030805 A1 | 18-02-2021 |

EPO FORM P0459

For more details about this annex : see Official Journal of the European Patent Office, No. 12/82